# EUROPEAN PATENT SPECIFICATION

(11) **EP 2 193 642 B1**
(45) Date of publication and mention of the grant of the patent: **16.05.2018**
(21) Application number: 07826628.5
(22) Date of filing: 02.10.2007
(51) Int. Cl.: H04L 29/06, H04W 88/06, H04W 28/06, H04L 29/08

(54) **IP MTU CONTROL BASED ON MULTIRADIO SCHEDULE**
IP-MTU-STEUERUNG AUF DER BASIS EINER MEHRFUNK-ABLAUFPLANUNG
COMMANDE DE MTU-IP SELON UNE PROGRAMMATION MULTIRADIO

(43) Date of publication of application: 09.06.2010
(73) Proprietor: Nokia Technologies Oy, 02610 Espoo (FI)
(72) Inventor: YLÄNEN, Jussi, FI-37560 Lempäälä (FI); PERNU, Ville, FI-33720 Tampere (FI); OKKER, Jani, FI-33580 Tampere (FI)
(74) Representative: Berggren Oy, Helsinki & Oulu
(86) International application number: PCT/IB2007/054009
(87) International publication number: WO 2009/044232

(56) References cited:
- EP-A- 1 341 350
- US-A1- 2003 032 391
- US-A1- 2007 070 961
- MCCANN DIGITAL EQUIPMENT CORPORATION S DEERING XEROX PARC J MOGUL DIGITAL EQUIPMENT CORPORATION J: "Path MTU Discovery for IP version 6; rfc1981.txt" IETF STANDARD, INTERNET ENGINEERING TASK FORCE, IETF, CH, August 1996 (1996-08), XP015007765 ISSN: 0000-0003

## Description

### BACKGROUND OF INVENTION

### 1. Field of Invention:

The present invention relates to a system for managing radio modules integrated within a wireless communication device, and more specifically, to a multiradio control system enabled to create an operational schedule for two or more concurrently operating radio modules, wherein at least one radio module supports Internet protocol.

### 2. Background:

Modern society has quickly adopted, and become reliant upon, handheld devices for wireless communication. For example, cellular telephones continue to proliferate in the global marketplace due to technological improvements in both the quality of the communication and the functionality of the devices. These wireless communication devices (WCDs) have become commonplace for both personal and business use, allowing users to transmit and receive voice, text and graphical data from a multitude of geographic locations. The wireless communication networks utilized by these devices span different frequencies and cover different transmission distances, each having strengths desirable for various applications. For example, while many devices typically utilize cellular communication like GSM or CDMA for long range wireless communication, these devices may also include support for near field wireless communication such as Bluetooth™, WLAN, RFID, IR, etc.

The advent of increased functionality in a single wireless device, while beneficial to a user, may also introduce problems related to the management of concurrent wireless communication. For example, one or more active applications (e.g., telephonic communication, email, text messaging, an Internet browser, etc.) and one or more active wirelessly coupled devices (e.g., headset, keyboard, an integrated automotive communication system, external memory storage, etc.) may lead to concurrent communication via a plurality of wireless communication mediums. A situation wherein wireless communication over a plurality of wireless mediums is occurring relatively simultaneously may lead to interference between the plurality of wireless mediums (and possibly other environmental interference).

Further, even if a communication strategy and/or system were available to manage the interoperation of multiple active wireless communication mediums, a problem may still exist for higher level protocols. For example, if an application (e.g., an Internet browser) communicating using Internet protocol over WLAN was not aware of scheduling limitations and/or restrictions imposed by a controller managing the WLAN connection, Internet protocol packet information could be lost due to the incorrect expectation of the full communication bandwidth afforded to WLAN. The loss of Internet protocol packets results in wasted power that is significant, especially for battery-powered devices, and may lead to packet retransmission that may further slow a connection or result in connection termination.

US 2007/0070961 discloses a method, wireless communication apparatus, and computer program products for adapting at least one transmission setting to be applied by a first transceiver, which is adapted to be operative in a predetermined frequency band, in response to communication by a second transceiver, which is adapted to be operative in the predetermined frequency band. It is determined whether prioritized data traffic is communicated by the second transceiver. If prioritized data traffic is communicated by the second transceiver, the transmission setting is adapted in dependence of the prioritized data traffic.

### SUMMARY OF INVENTION

The present invention includes at least a method, a device, a computer program and a computer software product for managing activity in two or more concurrently active wireless communication mediums being supported by at least one radio module integrated within a wireless communication device. More specifically, the present invention, in at least one embodiment, may align communication controlled by Internet protocol (IP) with operational schedules formulated for supporting wireless communication mediums and/or radio modules.

The present invention may, in accordance with at least one embodiment, use a path maximum transmit unit (path MTU) definition in order to custom tailor the size of data packets requested by the IP stack. This function may control the largest packet that may be created or received by the IP stack without automatic fragmentation. A multiradio controller charged with managing the operation of multiple wireless communication mediums being supported by one or more radio modules may also be granted access to set the path MTU.

For example, the multiradio controller may receive input from active wireless communication mediums and/or radio modules regarding messaging, traffic, status, etc. The multiradio controller may then utilize this information to formulate operational schedules for each wireless communication medium and/or radio module. The multiradio controller may also determine which, if any, of the wireless communication mediums is supporting IP, and may utilize an MTU-related operation to adjust the maximum packet size for IP packets being created for transmission so that these packets may correspond to the current operational schedule of the supporting wireless communication medium(s). In addition, the multiradio controller may also issue wireless alerts to other devices to alter the size of incoming packets.

According to a first aspect, a method performed by a multiradio controller for managing wireless communication by two or more wireless communication mediums supported by one or more radio modules in a wireless communication device is provided, the method, comprising: receiving information regarding the two or more wireless communication mediums supported by the one or more radio modules in the wireless communication device; formulating respective operational schedules for the two or more wireless communication mediums, wherein an operational schedule includes allowed time periods for communication by respective one of the two or more communication mediums; determining at least one wireless communication medium being used for communicating Internet Protocol information from the two or more wireless communication mediums; and adjusting, , in response to the determination that the at least one wireless communication medium is being used for communicating Internet Protocol information, maximum transfer packet size for the Internet Protocol communication to correlate size of Internet Protocol communication packets with the allowed time periods for the communication medium based on at least the respective operational schedule.

According to a second aspect, a computer program is provided, the computer program comprising computer readable program code configured to cause performation of a method according to the first aspect when said program is run on a computer.

According to third aspect, a multiradio controller for managing wireless communication by two or more wireless communication mediums supported by one or more radio modules in a wireless communication device is provided, the multiradio controller comprising: means for receiving information regarding the two or more wireless communication mediums supported by the one or more radio modules in the wireless communication device; means for formulating respective operational schedules for the two or more wireless communication mediums, wherein an operational schedule includes allowed time periods for communication by respective one of the two or more communication mediums; means for determining at least one wireless communication medium being used for communicating Internet Protocol information from the two or more wireless communication mediums; and means for adjusting, in response to the determination that the at least one wireless communication medium is being used for communicating Internet Protocol information, maximum transfer packet size for the Internet Protocol communication to correlate size of Internet Protocol communication packets with the allowed time periods for the communication medium based at least on the respective operational schedule.

### DESCRIPTION OF DRAWINGS

The invention will be further understood from the following description of various exemplary embodiments, taken in conjunction with appended drawings, in which:
FIG. 1 discloses an exemplary wireless operational environment, including wireless communication mediums of different effective range.
FIG. 2 discloses a modular description of an exemplary wireless communication device usable with at least one embodiment of the present invention.
FIG. 3 discloses an exemplary structural description of the wireless communication device previously described in FIG. 2.
FIG. 4A discloses an exemplary operational description of a wireless communication device utilizing a wireless communication medium in accordance with at least one embodiment of the present invention.
FIG. 4B discloses an operational example wherein interference occurs when utilizing multiple radio modems simultaneously within the same wireless communication device.
FIG. 5A discloses an example of single mode radio modules usable with at least one embodiment of the present invention.
FIG. 5B discloses an example of a multimode radio module usable with at least one embodiment of the present invention.
FIG. 5C discloses an exemplary Internet protocol (IP) stack in accordance with at least one embodiment of the present invention.
FIG. 5D discloses an exemplary path maximum transfer unit adjustment process usable with at least one embodiment of the present invention.
FIG. 6A discloses an exemplary structural description of a wireless communication device including a multiradio controller in accordance with at least one embodiment of the present invention.
FIG. 6B discloses a more detailed structural diagram of FIG. 6A including the multiradio controller and the radio modems.
FIG. 6C discloses an exemplary operational description of a wireless communication device including a multiradio controller in accordance with at least one embodiment of the present invention.
FIG. 7A discloses an exemplary structural description of a wireless communication device including a multiradio control system in accordance with at least one embodiment of the present invention.
FIG. 7B discloses a more detailed structural diagram of FIG. 7A including the multiradio control system and the radio modems.
FIG. 7C discloses an exemplary operational description of a wireless communication device including a multiradio control system in accordance with at least one embodiment of the present invention.
FIG. 8A discloses an exemplary structural description of a wireless communication device including a distributed multiradio control system in accordance with at least one embodiment of the present invention.
FIG. 8B discloses a more detailed structural diagram of FIG. 8A including the distributed multiradio control system and the radio modems.
FIG. 8C discloses an exemplary operational description of a wireless communication device including a distributed multiradio control system in accordance with at least one embodiment of the present invention.
FIG. 9A discloses an exemplary structural description of a wireless communication device including a distributed multiradio control system in accordance with an alternative embodiment of the present invention.
FIG. 9B discloses a more detailed structural diagram of FIG. 9A including the distributed multiradio control system and the radio modems.
FIG. 9C discloses an exemplary operational description of a wireless communication device including a distributed multiradio control system in accordance with the alternative embodiment of the present invention disclosed in FIG. 9A.
FIG. 10 discloses an exemplary information packet usable with at least one embodiment of the present invention.
FIG. 11A discloses an example of a multiradio controller integrated with the exemplary path maximum transfer unit adjustment process in accordance with at least one embodiment of the present invention.
FIG. 11B discloses an example of the information that may be involved in the process of FIG. 11A in accordance with at least one embodiment of the present invention.
FIG. 12A discloses an exemplary activity flow showing a before condition in accordance with at least one embodiment of the present invention.
FIG. 12B discloses an exemplary activity flow showing a potential scheduling effect of at least one embodiment of the present invention.
FIG. 12C discloses an exemplary process flowchart for adjusting path maximum transfer unit settings in accordance with at least one embodiment of the present invention.

### DESCRIPTION OF PREFERRED EMBODIMENT

While the invention has been described in terms of exemplary embodiments, various changes can be made therein without departing from the spirit and scope of the invention, as described in the appended claims.

### I. Wireless communication over different communication networks

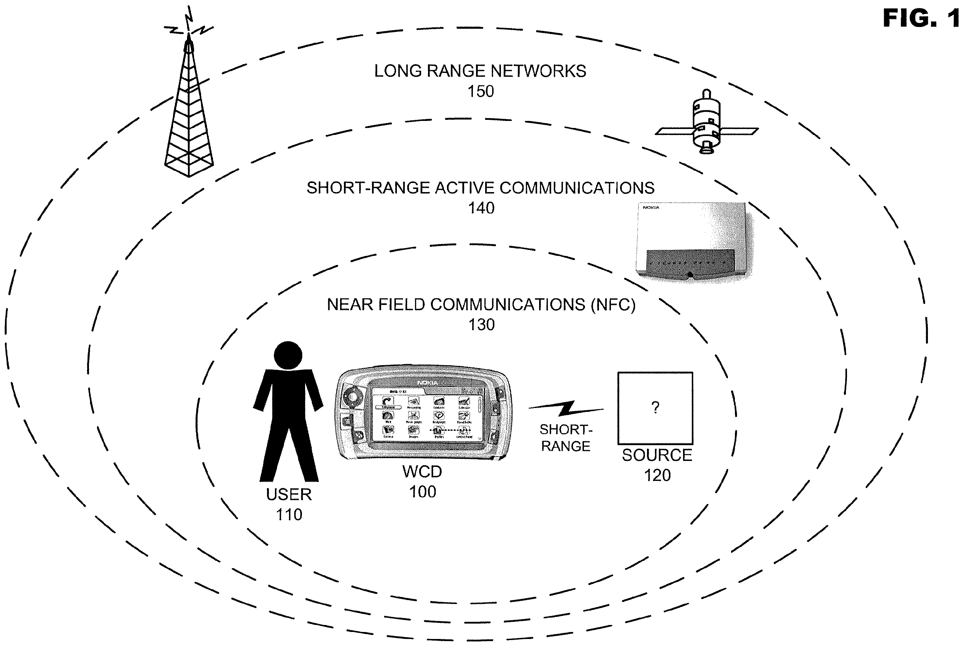

A WCD may both transmit and receive information over a wide array of wireless communication networks, each with different advantages regarding speed, range, quality (error correction), security (encoding), etc. These characteristics will dictate the amount of information that may be transferred to a receiving device, and the duration of the information transfer. FIG. 1 includes a diagram of a WCD and how it interacts with various types of wireless networks.

In the example pictured in FIG. 1, user 110 possesses WCD 100. This device may be anything from a basic cellular handset to a more complex device such as a wirelessly enabled palmtop or laptop computer. Near field communication (NFC) 130 may be considered to encompass a group of technologies enabling very short-range interaction between devices, including, but not limited to inductive, capacitive and RF coupling, or even optical communication. NFC may include various transponder-type interactions wherein normally only the scanning device requires its own power source. WCD 100 scans source 120 via short-range communication. A transponder in source 120 may use the energy and/or clock signal contained within the scanning signal, as in the case of RFID communication, to respond with data stored in the transponder. These types of technologies usually have an effective transmission range on the order of ten feet, and may be able to deliver stored data in amounts from a bit to over a megabit (or 125 Kbytes) relatively quickly. These features make such technologies well suited for identification, such as to receive an account number for a public transportation provider, a key code for an automatic electronic door lock, an account number for a credit or debit transaction, etc.

The transmission range between devices may be extended if both devices are capable of performing powered communication. Short-range active communication 140 may include applications where the sending and receiving devices are both active. An exemplary situation may include user 110 coming within effective transmission range of a Bluetooth™, WLAN, UWB, WUSB, etc. access point. In the case of Bluetooth™, a network may be automatically established to transmit information to WCD 100 possessed by user 110. The amount of information to be conveyed is unlimited, except that it must all be transferred in the time when user 110 is within effective transmission range of the access point. Due to the higher complexity of these wireless networks, additional time may be required to establish the initial connection to WCD 100, which may be increased if many devices are waiting in the area proximate to the access point. The transmission range of these networks depends on the technology, and may be from some 30 ft. to over 300 ft. with additional power boosting.

Long-range networks 150 may provide virtually uninterrupted communication coverage for WCD 100. Land-based radio stations or satellites may be used to relay various communication transactions worldwide. While these systems are extremely functional, the use of these systems is often charged on a per-minute basis to user 110, not including additional charges for data transfer (e.g., wireless Internet access). Further, the regulations covering these systems may cause additional overhead for both the users and providers, making the use of these systems more cumbersome.

### II. Wireless communication device

As previously described, the present invention may be implemented using a variety of wireless communication equipment. Therefore, it is important to understand the communication tools available to user 110 before exploring the present invention. For example, in the case of a cellular telephone or other handheld wireless devices, the integrated data handling capabilities of the device may play an important role in facilitating transactions between the transmitting and receiving devices.

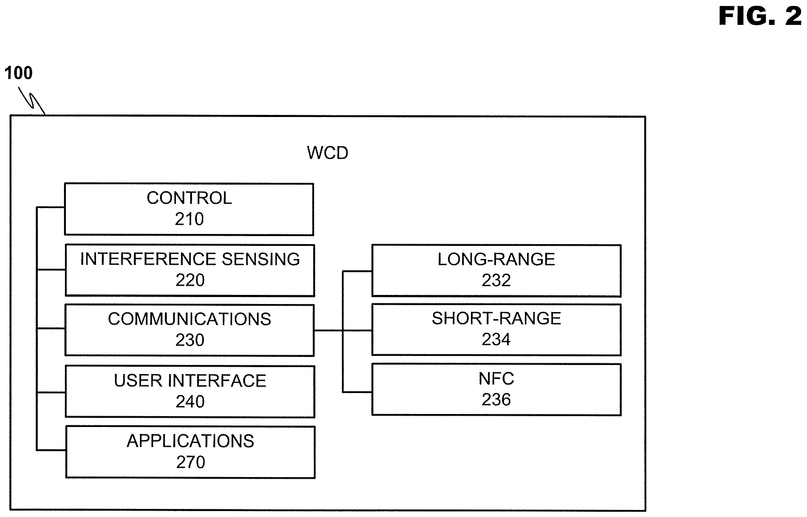

FIG. 2 discloses an exemplary modular layout for a wireless communication device usable with the present invention. WCD 100 is broken down into modules representing the functional aspects of the device. These functions may be performed by the various combinations of software and/or hardware components discussed below.

Control module 210 regulates the operation of the device. Inputs may be received from various other modules included within WCD 100. For example, interference sensing module 220 may use various techniques known in the art to sense sources of environmental interference within the effective transmission range of the wireless communication device. Control module 210 interprets these data inputs, and in response, may issue control commands to the other modules in WCD 100.

Communications module 230 incorporates all of the communication aspects of WCD 100. As shown in FIG. 2, communications module 230 may include, for example, long-range communications module 232, short-range communications module 234 and NFC module 236. Communications module 230 may utilize one or more of these sub-modules to receive a multitude of different types of communication from both local and long distance sources, and to transmit data to recipient devices within the transmission range of WCD 100. Communications module 230 may be triggered by control module 210, or by control resources local to the module responding to sensed messages, environmental influences and/or other devices in proximity to WCD 100.

User interface module 240 includes visual, audible and tactile elements that may allow user 110 to receive data from, and enter data into, the device. The data entered by user 110 may be interpreted by control module 210 to affect the behavior of WCD 100. User-inputted data may also be transmitted by communications module 230 to other devices within effective transmission range. Other devices in transmission range may also send information to WCD 100 via communications module 230, and control module 210 may cause this information to be transferred to user interface module 240 for presentment to the user.

Applications module 250 may incorporate all other hardware and/or software applications on WCD 100. These applications may include sensors, interfaces, utilities, interpreters, data applications, etc., and may be invoked by control module 210 to read information provided by the various modules and in turn supply information to requesting modules in WCD 100.

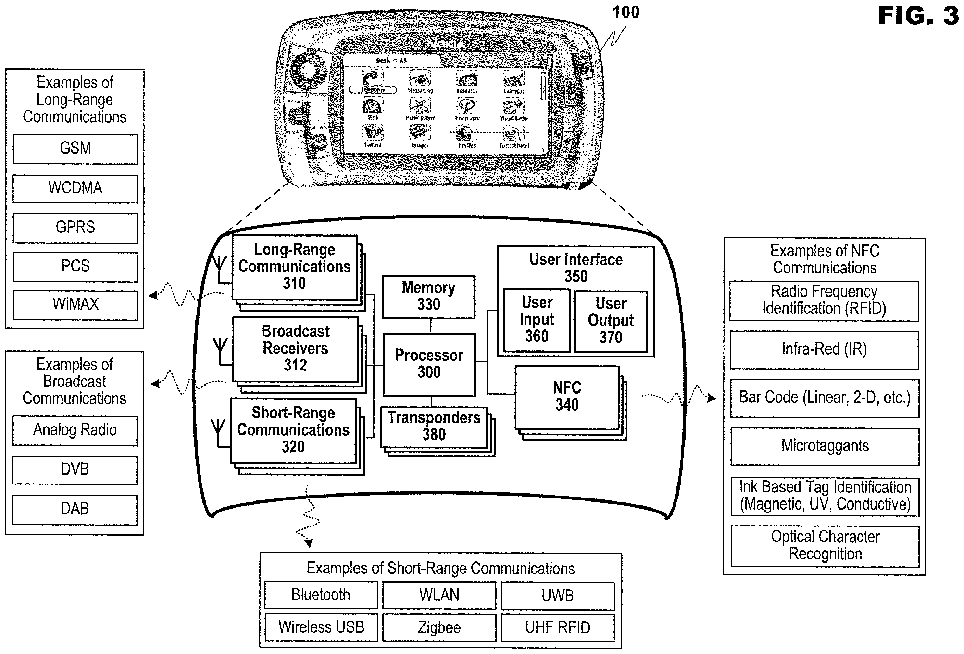

FIG. 3 discloses an exemplary structural layout of WCD 100 in accordance with at least one embodiment of the present invention usable for implementing the functionality of the modular system previously described in FIG. 2. Processor 300 controls overall device operation. As shown in FIG. 3, processor 300 is coupled to one or more communications sections 310, 320 and 340. Processor 300 may be implemented with one or more microprocessors that are each capable of executing software instructions stored in memory 330.

Memory 330 may include random access memory (RAM), read only memory (ROM), and/or flash memory, and stores information in the form of data and software components (also referred to herein as modules). The data stored by memory 330 may be associated with particular software components. In addition, this data may be associated with databases, such as a bookmark database or a business database for scheduling, email, etc.

The software components stored by memory 330 include instructions that can be executed by processor 300. Various types of software components may be stored in memory 330. For instance, memory 330 may store software components that control the operation of communication sections 310, 320 and 340. Memory 330 may also store software components including a firewall, a service guide manager, a bookmark database, user interface manager, and any communication utilities modules required to support WCD 100.

Long-range communications 310 performs functions related to the exchange of information over large geographic areas (such as cellular networks) via an antenna. These communication methods include technologies from the previously described 1G to 3G. In addition to basic voice communication (e.g., via GSM), long-range communications 310 may operate to establish data communication sessions, such as General Packet Radio Service (GPRS) sessions and/or Universal Mobile Telecommunications System (UMTS) sessions. Also, long-range communications 310 may operate to transmit and receive messages, such as short messaging service (SMS) messages and/or multimedia messaging service (MMS) messages.

As a subset of long-range communications 310, or alternatively operating as an independent module separately connected to processor 300, transmission receiver 312 allows WCD 100 to receive transmission messages via mediums such as Digital Video Broadcast for Handheld Devices (DVB-H). These transmissions may be encoded so that only certain designated receiving devices may access the transmission content, and may contain text, audio or video information. In at least one example, WCD 100 may receive these transmissions and use information contained within the transmission signal to determine if the device is permitted to view the received content.

Short-range communications 320 is responsible for functions involving the exchange of information across short-range wireless networks. As described above and depicted in FIG. 3, examples of such short-range communications 320 are not limited to Bluetooth™, WLAN, UWB and Wireless USB connections. Accordingly, short-range communications 320 performs functions related to the establishment of short-range connections, as well as processing related to the transmission and reception of information via such connections.

Near field communication (NFC) 340, also depicted in FIG. 3, may provide functionality related to the short-range scanning of machine-readable data. For example, processor 300 may control components in NFC 340 to generate RF signals for activating an RFID transponder, and may in turn control the reception of signals from an RFID transponder. Other short-range scanning methods for reading machine-readable data that may be supported by the NFC 340 are not limited to IR communication, linear and 2-D (e.g., QR) bar code readers (including processes related to interpreting UPC labels), and optical character recognition devices for reading magnetic, UV, conductive or other types of coded data that may be provided in a tag using suitable ink. In order for the NFC 340 to scan the aforementioned types of machine-readable data, the input device may include optical detectors, magnetic detectors, CCDs or other sensors known in the art for interpreting machine-readable information.

As further shown in FIG. 3, user interface 350 is also coupled to processor 300. User interface 350 facilitates the exchange of information with a user. FIG. 3 shows that user interface 350 includes a user input 360 and a user output 370. User input 360 may include one or more components that allow a user to input information. Examples of such components include keypads, touch screens, and microphones. User output 370 allows a user to receive information from the device. Thus, user output portion 370 may include various components, such as a display, light emitting diodes (LED), tactile emitters and one or more audio speakers. Exemplary displays include liquid crystal displays (LCDs), and other video displays.

WCD 100 may also include one or more transponders 380. This is essentially a passive device that may be programmed by processor 300 with information to be delivered in response to a scan from an outside source. For example, an RFID scanner mounted in an entryway may continuously emit radio frequency waves. When a person with a device containing transponder 380 walks through the door, the transponder is energized and may respond with information identifying the device, the person, etc. In addition, a scanner may be mounted (e.g., as previously discussed above with regard to examples of NFC 340) in WCD 100 so that it can read information from other transponders in the vicinity.

Hardware corresponding to communications sections 310, 312, 320 and 340 provide for the transmission and reception of signals. Accordingly, these portions may include components (e.g., electronics) that perform functions, such as modulation, demodulation, amplification, and filtering. These portions may be locally controlled, or controlled by processor 300 in accordance with software communication components stored in memory 330.

The elements shown in FIG. 3 may be constituted and coupled according to various techniques in order to produce the functionality described in FIG. 2. One such technique involves coupling separate hardware components corresponding to processor 300, communications sections 310, 312 and 320, memory 330, NFC 340, user interface 350, transponder 380, etc. through one or more bus interfaces (which may be wired or wireless bus interfaces). Alternatively, any and/or all of the individual components may be replaced by an integrated circuit in the form of a programmable logic device, gate array, ASIC, multi-chip module, etc. programmed to replicate the functions of the standalone devices. In addition, each of these components is coupled to a power source, such as a removable and/or rechargeable battery (not shown).

The user interface 350 may interact with a communication utilities software component, also contained in memory 330, which provides for the establishment of service sessions using long-range communications 310 and/or short-range communications 320. The communication utilities component may include various routines that allow the reception of services from remote devices according to mediums such as the Wireless Application Medium (WAP), Hypertext Markup Language (HTML) variants like Compact HTML (CHTML), etc.

### III. Exemplary operation of a wireless communication device including potential interference problems encountered.

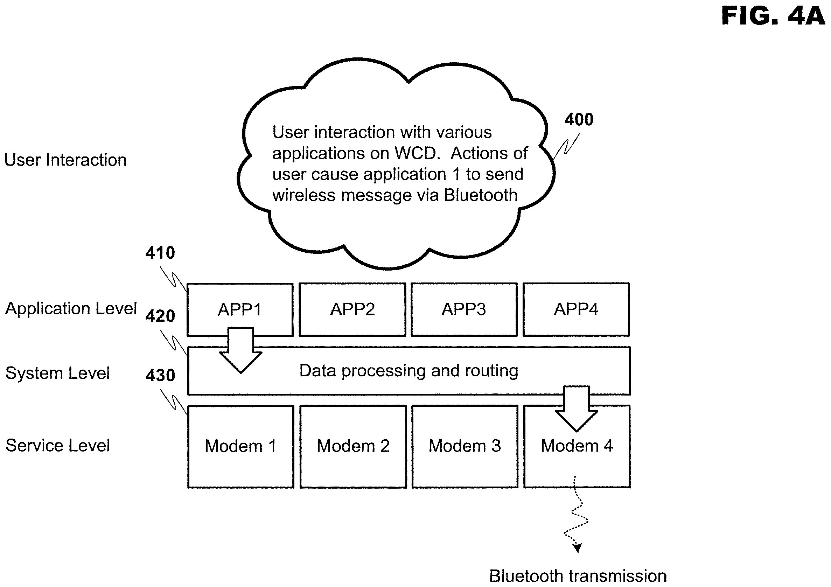

FIG. 4A discloses a stack approach to understanding the operation of a WCD in accordance with at least one embodiment of the present invention. At the top level 400, user 110 interacts with WCD 100. The interaction involves user 110 entering information via user input 360 and receiving information from user output 370 in order to activate functionality in application level 410. In the application level, programs related to specific functionality within the device interact with both the user and the system level. These programs include applications for visual information (e.g., web browser, DVB-H receiver, etc.), audio information (e.g., cellular telephone, voice mail, conferencing software, DAB or analog radio receiver, etc.), recording information (e.g., digital photography software, word processing, scheduling, etc.) or other information processing. Actions initiated at application level 410 may require information to be sent from or received into WCD 100. In the example of FIG. 4A, data is requested to be sent to a recipient device via Bluetooth™ communication. As a result, application level 410 may then call resources in the system level to initiate the required processing and routing of data.

System level 420 processes data requests and routes the data for transmission. Processing may include, for example, calculation, translation, conversion and/or packetizing the data. The information may then be routed to an appropriate communication resource in the service level. If the desired communication resource is active and available in the service level 430, the packets may be routed to a radio modem for delivery via wireless transmission. There may be a plurality of modems operating using different wireless mediums. For example, in FIG. 4A, modem 4 is activated and able to send packets using Bluetooth™ communication. However, a radio modem (as a hardware resource) need not be dedicated only to a specific wireless medium, and may be used for different types of communication depending on the requirements of the wireless medium and the hardware characteristics of the radio modem.

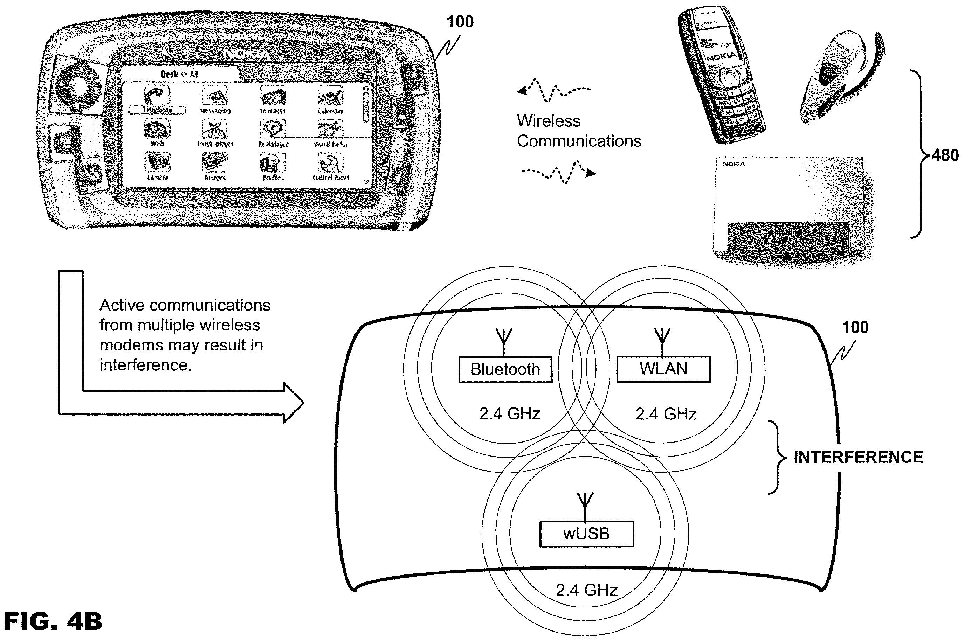

FIG. 4B discloses a situation wherein the above described exemplary operational process may cause more than one radio modem to become active. In this case, WCD 100 is both transmitting and receiving information via wireless communication over a multitude of mediums. WCD 100 may be interacting with various secondary devices such as those grouped at 480. For example, these devices may include cellular handsets communicating via long-range wireless communication like GSM, wireless headsets communicating via Bluetooth™, Internet access points communicating via WLAN, etc.

Problems may occur when some or all of these communications are carried on simultaneously. As further shown in FIG. 4B, multiple modems operating simultaneously may cause interference for each other. Such a situation may be encountered when WCD 100 is communicating with more than one external device (as previously described). In an exemplary extreme case, devices with modems simultaneously communicating via Bluetooth™, WLAN and wireless USB would encounter substantial overlap since all of these wireless mediums operate in the 2.4 GHz band. The interference, shown as an overlapping portion of the fields depicted in FIG. 4B, would cause packets to be lost and the need for retransmission of these lost packets. Retransmission requires that future time slots be used to retransmit lost information, and therefore, overall communication performance will at least be reduced, if the signal is not lost completely. The present invention, in at least one embodiment, seeks to manage problematic situations where possibly conflicting communications may be occurring simultaneously so that interference is minimized or totally avoided, and as a result, speed and quality are maximized.

### IV. Radio modem signal control in a wireless communication device.

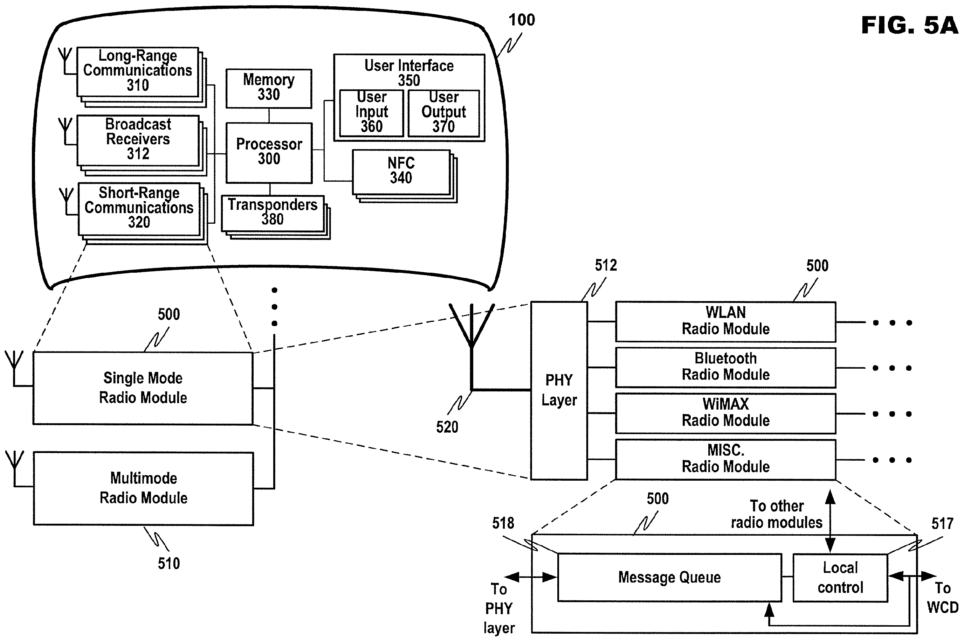

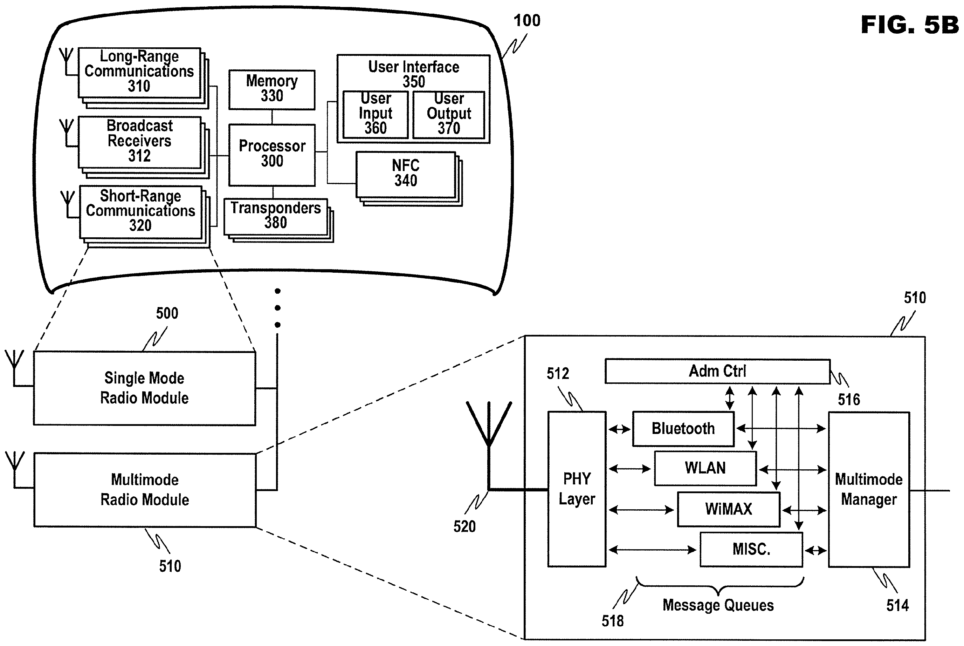

FIG. 5A discloses an example of different types of radio modules that may be implemented in WCD 100. The choice of radio modules to utilize may depend on various requirements for functionality in WCD 100, or conversely, on limitations in the device such as space or power limitations. Radio module 500 is a single mode radio module and radio module 510 is a multimode radio module (explained further in FIG. 5B). Single mode radio module 500 may only support one wireless communication medium at a time (e.g., a single mode radio module may be configured to support Bluetooth™) and may share physical resources (e.g. physical layer 512) such as a common antenna 520 or an antenna array and associated hardware.

Since all of the single mode radio modules may share the resource of physical layer 512 as depicted in FIG. 5A, some sort of control must exist in order to control how each single mode radio module 500 uses these resources. Local controller 517 may therefore be included in each radio modem to control the usage of PHY layer 512. This local controller may take as inputs message information from other components within WCD 100 wishing to send messages via single mode radio module 500 and also information from other single mode radio modules 500 as to their current state. This current state information may include a priority level, an active/inactive state, a number of messages pending, a duration of active communication, etc. Local controller 517 may use this information to control the release of messages from message queue 518 to PHY layer 512, or further, to control the quality level of the messages sent from message queue 518 in order to conserve resources for other wireless communication mediums. The local control in each single mode radio module 500 may take the form of, for example, a schedule for utilization of a wireless communication medium implemented in the radio module.

An exemplary multimode radio module 510 is now explained in FIG. 5B. Multimode radio module 510 may include local control resources for managing each "radio" (e.g., software based radio control stacks) attempting to use the physical layer (PHY) resources of multimode radio module 510. In this example embodiment, multimode radio module 510 includes at least three radio stacks or radio protocols (labeled Bluetooth, WLAN and WiMAX in FIG. 5B) that may share the PHY layer resources (e.g., hardware resources, antenna, etc.) of multimode radio module 510. It should be noted, however, that the number of radio stacks in multimode radio module 510 can vary depending on the embodiment, and may be, for example, two in an exemplary integrated Bluetooth/WLAN radio implementation. The local control resources may include an admission controller (Adm Ctrl 516) and a multimode controller (Multimode Manager 514). These local control resources may be embodied as a software program and/or in a hardware form (e.g., logic device, gate array, MCM, ASIC, etc.) in a dual-mode radio modem interface, and the radio modem interface may be coupled to, or alternatively, embedded in multimode radio module 510.

Admission control 516 may act as a gateway for the multimode radio module 510 by filtering out both different wireless communication medium requests from the operating system of WCD 100 that may be sent by multimode radio module 510 and that may further result in conflicts for multimode radio module 510. The conflict information may be sent along with operational schedule information for other radio modules to multimode manager 514 for further processing. The information received by multimode manager 514 may then be used to formulate a schedule, such as a schedule for utilization of wireless communication mediums, controlling the release of messages for transmission from the various message queues 518.

### V. Internet Protocol.

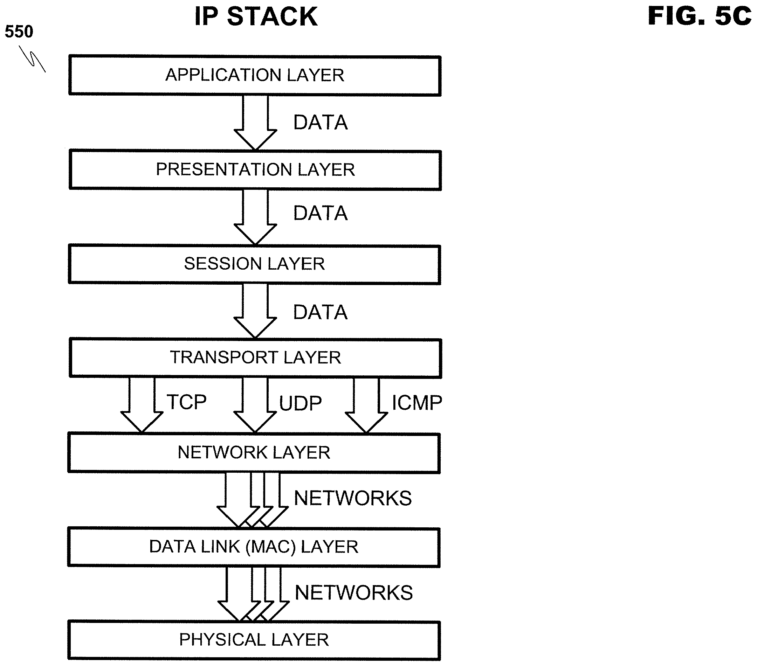

Now referring to FIG. 5C, an exemplary Internet Protocol (IP) Stack 550 is disclosed. IP may be utilized by software applications as a standard for sending information over a packet-switched wide area network (WAN) like the Internet. While not depicted in this diagrammatic example, data may flow in both directions (e.g., while the diagram only shows data being sent from an application, the depicted process may also operate in reverse when an application receives information). An application (e.g., web browser, email, file upload/download, etc.) in the application layer may pass information to the presentation layer for encryption and data conversion. For example, a file may be translated from a proprietary file type into a more generic format for transfer. The converted file may then be handled by the session layer and transport layer which control the transfer of information. For example, a file may be transferred using the Transmission Control protocol (TCP) so to ensure intact delivery of information, or alternatively, using User Datagram protocol (UDP) which may be faster and more efficient because it does not retransmit erroneous or dropped packets. The term datagram is substantially synonymous to packet in IP. Each datagram may contain at least a header and payload, wherein the header includes at least source and destination addresses. Internet Control Message Protocol (ICMP) is used to send error and control messages over IP. For example, a router may use ICMP to notify a sender that its destination node is not available, or the ping utility may send ICMP echo requests to verify IP addresses.

The network layer may then direct IP packets (or datagrams) to an appropriate medium for conveyance to the destination node. For example, WCD 100 may convey IP packets over a variety of both long-range and/or short-range wireless communication mediums. In the case of long-range communication, IP data packets may be sent and received via wireless communication mediums such as, for example, GPRS. On the other hand, a short-range wireless coupling to another device, such as an access point, via a wireless communication medium such as, for example, Bluetooth™ or WLAN may also enable the transmission and receipt of IP packets. These IP packets may be further identified as being transmitted from a particular device (e.g., WCD 100) in the data link layer, which then routes the wireless communication medium/IP packets to the wireless communication hardware and/or software that make up the physical layer.

During the transmission process, IP datagrams may be fragmented (e.g., divided into smaller packets) by routers whenever two routers employ a link where the original IP datagram could not it into a single wireless communication packet. In order to facilitate faster conveyance, the size of the maximum IP datagram created by IP stack 550 may be controlled by a variable called maximum transfer unit (MTU). The MTU variable may, for example, be utilized to reduce the size of IP packets sent by a device. A smaller IP maximum packet size may result in more packets being sent from WCD 100, but it also may expedite overall transmission completion since the amount of packet fragmentation over the entire transmission process may be reduced. If conditions should change (e.g., an alternative communication medium is being employed), the MTU may be adjusted to increase packet size so that the additional available bandwidth may be leveraged to increase performance.

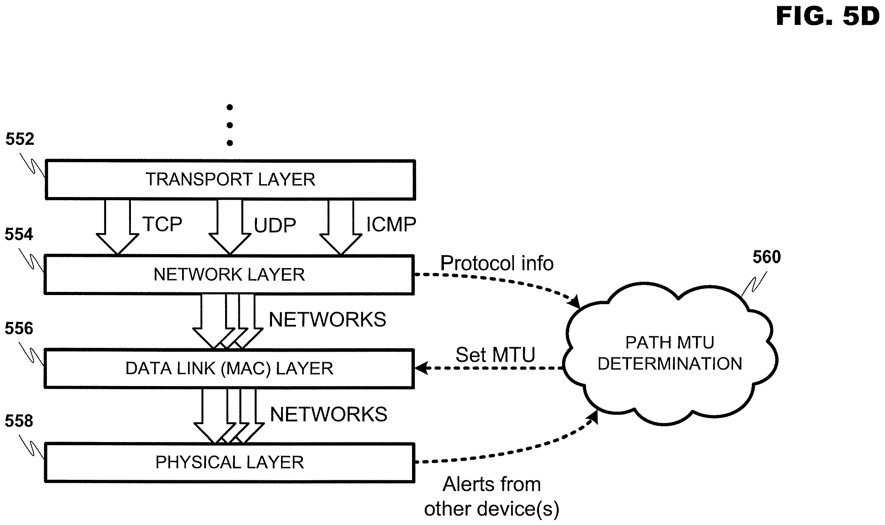

FIG. 5D discloses information about a specific type of MTU: link maximum transfer units (link MTU). A link MTU typically depends only on lower level (e.g., link layer) hardware protocol and implementation when setting the maximum IP datagram size. For example, a standard link MTU as defined by the use of an Ethernet connection is 1500 bytes/datagram. Path MTU is the lowest level of the link MTU variables along an arbitrary Internet path. In the example of FIG 5D, Transport layer 552 may send packets in the form of TCP packets, UDP packets or ICMP packets to network layer 554. Network layer 554 may in turn supply information on the specific communication medium being employed to convey IP packets (e.g., the identification of a particular wireless communication medium) to a path MTU determination hardware and/or software module 560 embedded within the overall control and management structure of the IP stack. Since a link MTU is typically based only on the link level setup, this information may be utilized, along with any requests and/or alerts received from other devices (e.g., via physical layer 558), to adjust the path MTU in data link (MAC) layer 556. For example, if a wireless communication medium such as WLAN attempts to transmit IP packets in their original size directly from the IP stack, the path MTU size will have an effect directly to the Media Access Control Packet Data Unit (MAC PDU) size as larger IP packets need to be transmitted as longer packets over the wireless link. It is important to note that it is possible for this change to be implemented in different layers of IP stack 550, and that the data link (MAC) layer 558 is used simply as an example for explaining a possible embodiment of the present invention. Typically, a link or path MTU setting between two devices may be deemed "predetermined" since the setting mainly depends on the initial link setup and may not change frequently. A device in active IP communication may only perform path MTU discovery (e.g., verify the MTU setting) periodically, but relatively infrequently (e.g., once every two minutes or so).

### VI. A wireless communication device including a multiradio controller.

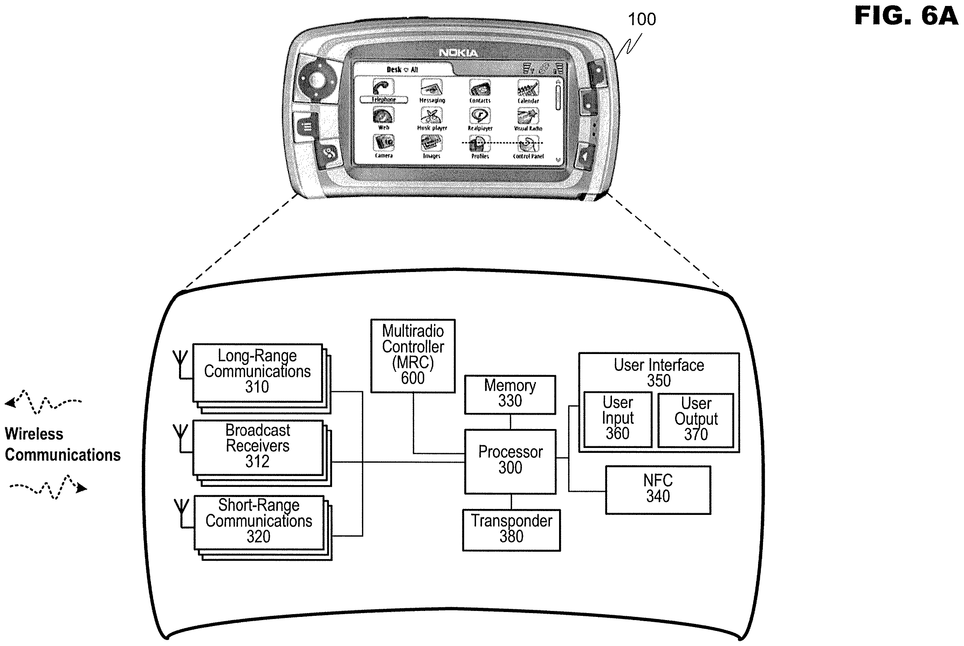

In an attempt to better manage communication in WCD 100, an additional controller dedicated to managing wireless communication may be introduced. WCD 100, as pictured in FIG. 6A, includes a multiradio controller (MRC) 600 in accordance with at least one embodiment of the present invention. MRC 600 is coupled to the master control system of WCD 100. This coupling enables MRC 600 to communicate with radio modems or other similar devices in communications modules 310 312, 320 and 340 via the master operating system of WCD 100.

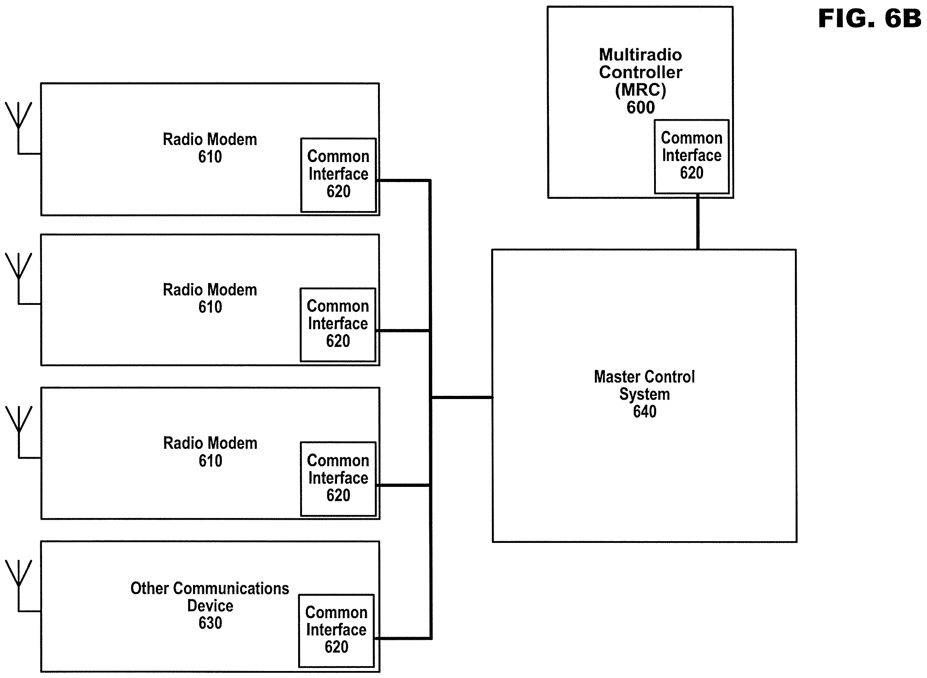

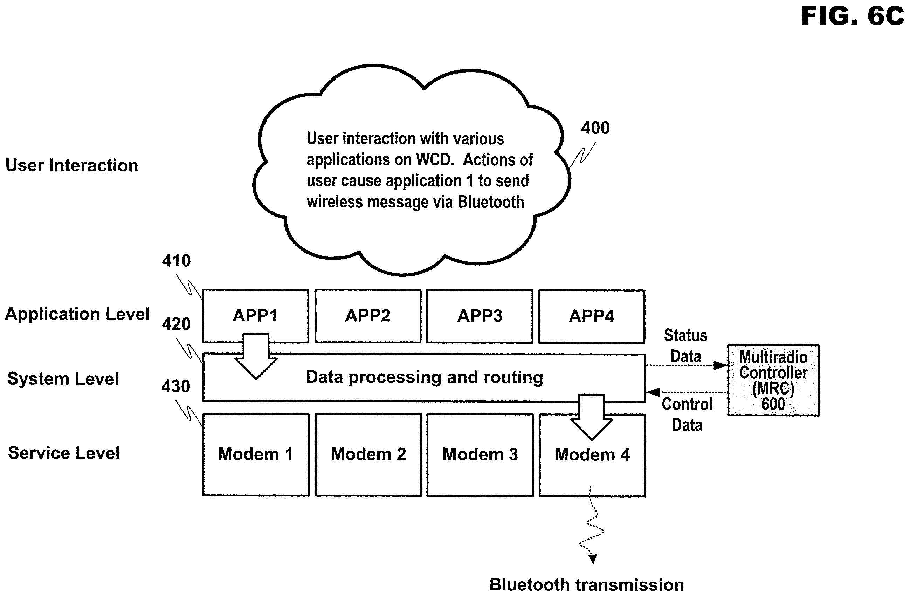

FIG. 6B discloses in detail at least one embodiment of WCD 100, which may include multiradio controller (MRC) 600 introduced in FIG. 6A in accordance with at least one embodiment of the present invention. MRC 600 includes common interface 620 by which information may be sent or received through master control system 640. Radio modems 610 and other devices 630 may also be referred to as "modules" in this disclosure as they may contain supporting hardware and/or software resources in addition to the modem itself. These resources may include control, interface and/or processing resources. For example, each radio modem 610 or similar communication device 630 (e.g., an RFID scanner for scanning machine-readable information) may also include some sort of common interface 620 for communicating with master control system 640. As a result, all information, commands, etc. occurring between radio modems 610, similar devices 630 and MRC 600 are conveyed by the communication resources of master control system 640. The possible effect of sharing communication resources with all the other functional modules within WCD 100 will be discussed with respect to FIG. 6C.

FIG. 6C discloses an operational diagram similar to FIG. 4A including the effect of MRC 600 in accordance with at least one embodiment of the present invention. In this system MRC 600 may receive operational data from the master operating system of WCD 100, concerning for example applications running in application level 410, and status data from the various radio communication devices in service level 430. MRC 600 may use this information to issue scheduling commands to the communication devices in service level 430 in an attempt to avoid communication problems. However, problems may occur when the operations of WCD 100 are fully employed. Since the various applications in application level 410, the operating system in system level 420, the communication devices in service level 430 and MRC 600 must all share the same communication system, delays may occur when all aspects of WCD 100 are trying to communicate on the common interface system 620. As a result, delay sensitive information regarding both communication resource status information and radio modem 610 control information may become delayed, nullifying any beneficial effect from MRC 600. Therefore, a system better able to handle the differentiation and routing of delay sensitive information is required if the beneficial effect of MRC 600 is to be realized.

### VII. A wireless communication device including a multiradio control system.

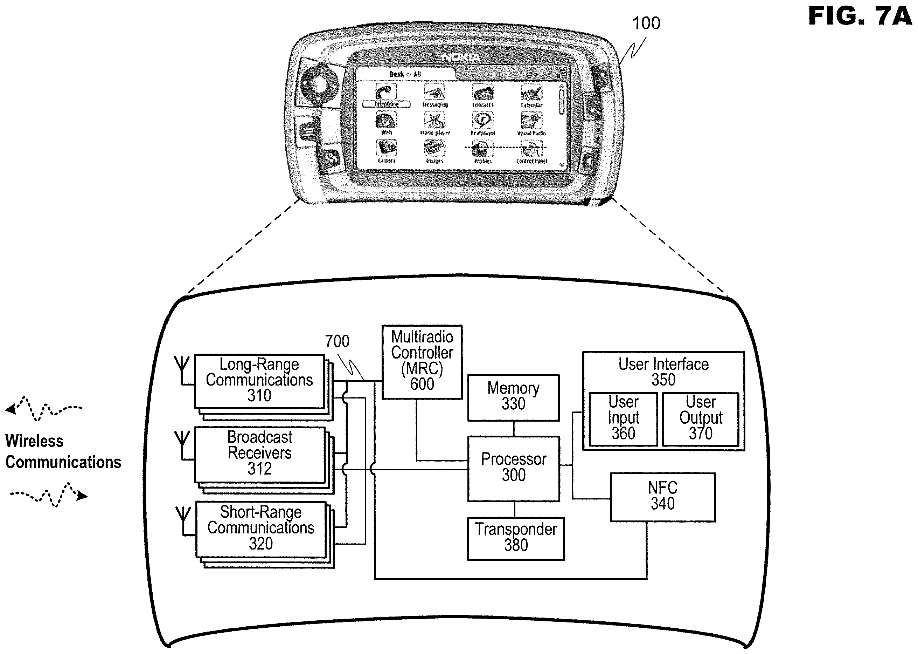

FIG. 7A introduces MRC 600 as part of a multiradio control system (MCS) 700 in WCD 100 in accordance with at least one embodiment of the present invention. MCS 700 directly links the communication resources of modules 310, 312, 320 and 340 to MRC 600. MCS 700 may provide a dedicated low-traffic communication structure for carrying delay sensitive information both to and from MRC 600.

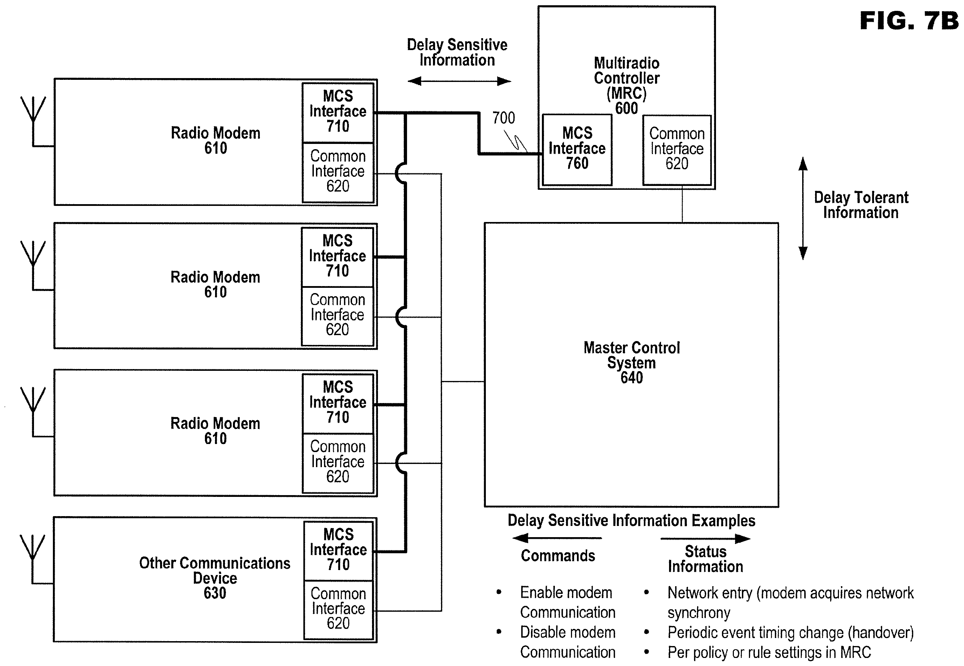

Additional detail is shown in FIG. 7B. MCS 700 forms a direct link between MRC 600 and the communication resources of WCD 100. This link may be established by a system of dedicated MCS interfaces 710 and 760. For example, MCS interface 760 may be coupled to MRC 600. MCS Interfaces 710 may connect radio modems 610 and other similar communication devices 630 to MCS 700 in order to form an information conveyance for allowing delay sensitive information to travel to and from MRC 600. In this way, the abilities of MRC 600 are no longer influenced by the processing load of master control system 640. As a result, any information still communicated by master control system 640 to and from MRC 600 may be deemed delay tolerant, and therefore, the actual arrival time of this information does not substantially influence system performance. On the other hand, all delay sensitive information is directed to MCS 700, and therefore is insulated from the loading of the master control system.

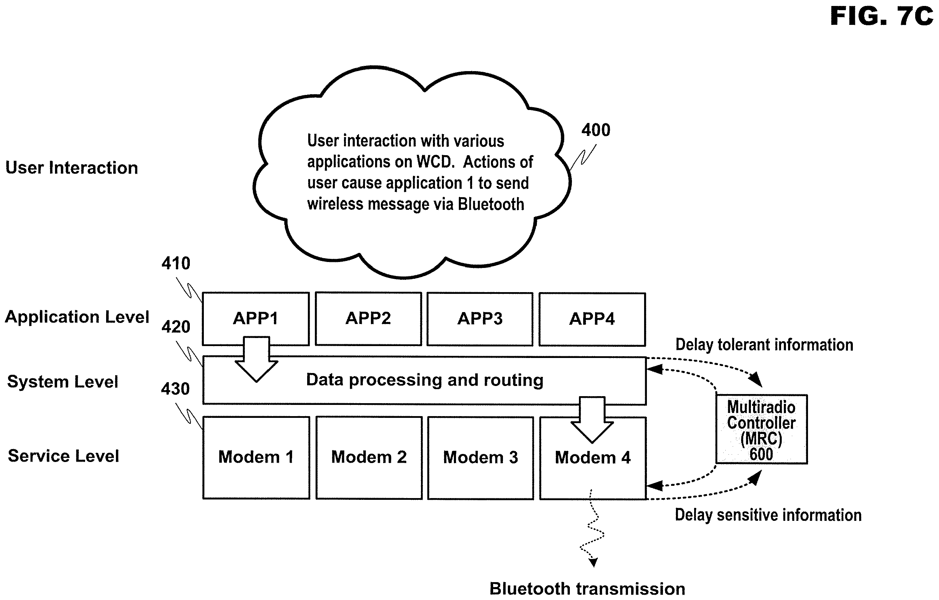

The effect of MCS 700 is seen in FIG. 7C in accordance with at least one embodiment of the present invention. Information may now be received in MRC 600 from at least two sources. System level 420 may continue to provide information to MRC 600 through master control system 640. In addition, service level 430 may specifically provide delay sensitive information conveyed by MCS 700. MRC 600 may distinguish between these two classes of information and act accordingly. Delay tolerant information may include information that typically does not change when a radio modem is actively engaged in communication, such as radio mode information (e.g., GPRS, Bluetooth™, WLAN, etc.), priority information that may be defined by user settings, the specific service the radio is driving (QoS, real time/non real time), etc. Since delay tolerant information changes infrequently, it may be delivered in due course by master control system 640 of WCD 100. Alternatively, delay sensitive (or time sensitive) information includes at least modem operational information that frequently changes during the course of a wireless connection, and therefore, requires immediate update. As a result, delay sensitive information may need to be delivered directly from the plurality of radio modems 610 through the MCS interfaces 710 and 760 to MRC 600, and may include radio modem synchronization information. Delay sensitive information may be provided in response to a request by MRC 600, or may be delivered as a result of a change in radio modem settings during transmission, as will be discussed with respect to synchronization below.

### VIII. A wireless communication device including a distributed multiradio control system.

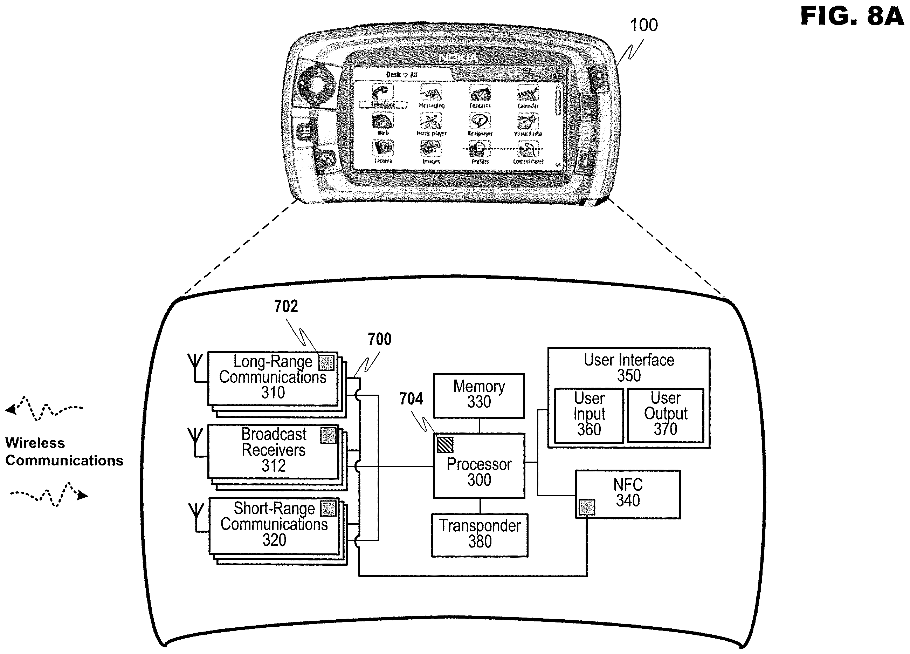

FIG. 8A discloses an alternative configuration in accordance with at least one embodiment of the present invention, wherein a distributed multiradio control system (MCS) 700 is introduced into WCD 100. Distributed MCS 700 may, in some cases, be deemed to provide an advantage over a centralized MRC 600 by distributing these control features into already necessary components within WCD 100. As a result, a substantial amount of the communication management operations may be localized to the various communication resources, such as radio modems (modules) 610, reducing the overall amount of control command traffic in WCD 100.

MCS 700, in this example, may be implemented utilizing a variety of bus structures, including the I²C interface commonly found in portable electronic devices, as well as emerging standards such as SLIMbus that are now under development. I²C is a multi-master bus, wherein multiple devices can be connected to the same bus and each one can act as a master through initiating a data transfer. An I²C bus contains at least two communication lines, an information line and a clock line. When a device has information to transmit, it assumes a master role and transmits both its clock signal and information to a recipient device. SLIMbus, on the other hand, utilizes a separate, non-differential physical layer that runs at rates of 50 Mbits/s or slower over just one lane. It is being developed by the Mobile Industry Processor Interface (MIPI) Alliance to replace today's I²C and I²S interfaces while offering more features and requiring the same or less power than the two combined.

MCS 700 directly links distributed control components 702 in modules 310, 312, 320 and 340. Another distributed control component 704 may reside in master control system 640 of WCD 100. It is important to note that distributed control component 704 shown in processor 300 is not limited only to this embodiment, and may reside in any appropriate system module within WCD 100. The addition of MCS 700 provides a dedicated low-traffic communication structure for carrying delay sensitive information both to and from the various distributed control components 702.

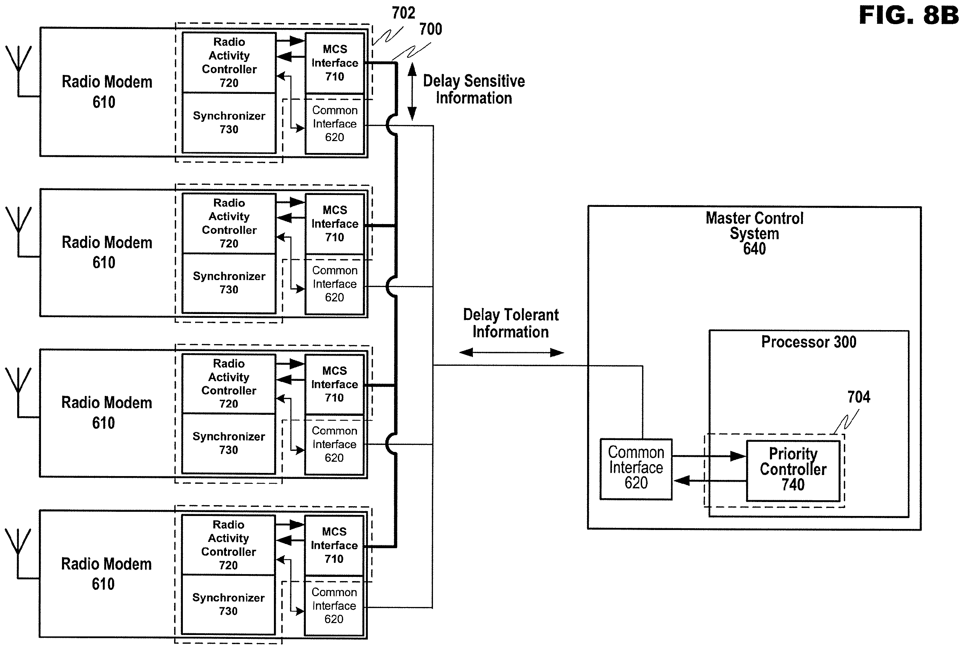

The exemplary embodiment disclosed in FIG. 8A is described with more detail in FIG. 8B. MCS 700 forms a direct link between distributed control components 702 within WCD 100. Distributed control components 702 in radio modems 610 (together forming a "module") may, for example, consist of MCS interface 710, radio activity controller 720 and synchronizer 730. Radio activity controller 720 uses MCS interface 710 to communicate with distributed control components in other radio modems 610. Synchronizer 730 may be utilized to obtain timing information from radio modem 610 to satisfy synchronization requests from any of the distributed control components 702. Radio activity controller 702 may also obtain information from master control system 640 (e.g., from distributed control component 704) through common interface 620. As a result, any information communicated by master control system 640 to radio activity controller 720 through common interface 620 may be deemed delay tolerant, and therefore, the actual arrival time of this information does not substantially influence communication system performance. On the other hand, all delay sensitive information may be conveyed by MCS 700, and therefore is insulated from master control system overloading.

As previously stated, a distributed control component 704 may exist within master control system 640. Some aspects of this component may reside in processor 300 as, for example, a running software routine that monitors and coordinates the behavior of radio activity controllers 720. Processor 300 is shown to contain priority controller 740. Priority controller 740 may be utilized to monitor active radio modems 610 in order to determine priority amongst these devices. Priority may be determined by rules and/or conditions stored in priority controller 740. Modems that become active may request priority information from priority controller 740. Further, modems that go inactive may notify priority controller 740 so that the relative priority of the remaining active radio modems 610 may be adjusted accordingly. Priority information is usually not considered delay sensitive because it is mainly updated when radio modems 610 activate/deactivate, and therefore, does not frequently change during the course of an active communication connection in radio modems 610. As a result, this information may be conveyed to radio modems 610 using common interface system 620 in at least one embodiment of the present invention.

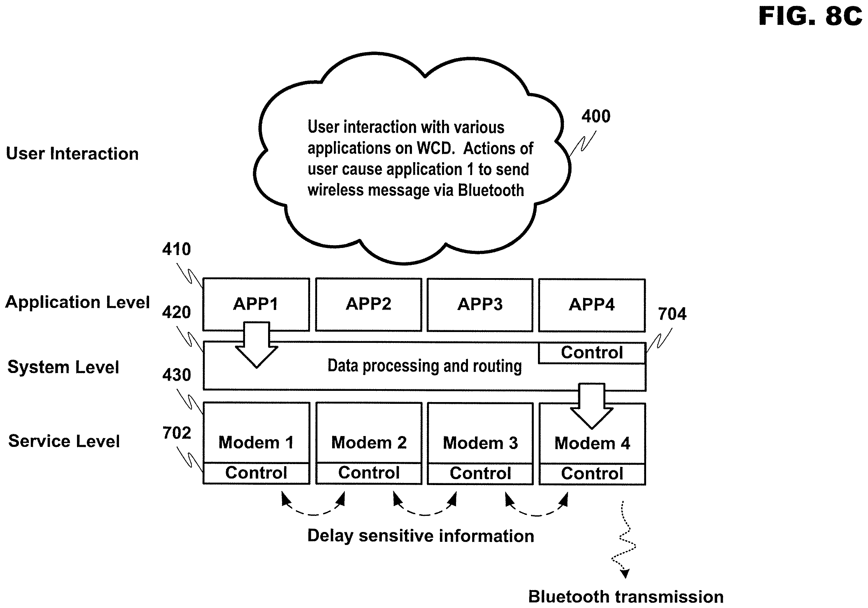

At least one effect of a distributed control MCS 700 is seen in FIG. 8C. System level 420 may continue to provide delay tolerant information to distributed control components 702 through master control system 640. In addition, distributed control components 702 in service level 430, such as modem activity controllers 720, may exchange delay sensitive information with each other via MCS 700. Each distributed control component 702 may distinguish between these two classes of information and act accordingly. Delay tolerant information may include information that typically does not change when a radio modem is actively engaged in communication, such as radio mode information (e.g., GPRS, Bluetooth™, WLAN, etc.), priority information that may be defined by user settings, the specific service the radio is driving (QoS, real time/non real time), etc. Since delay tolerant information changes infrequently, it may be delivered in due course by master control system 640 of WCD 100. Alternatively, delay sensitive (or time sensitive) information may include at least modem operational information that frequently changes during the course of a wireless connection, and therefore, requires immediate update. Delay sensitive information needs to be delivered directly between distributed control components 702, and may include radio modem synchronization and activity control information. Delay sensitive information may be provided in response to a request, or may be delivered as a result of a change in radio modem, which will be discussed with respect to synchronization below.

MCS interface 710 may be used to (1) Exchange synchronization information, and (2) Transmit identification or prioritization information between various radio activity controllers 720. In addition, as previously stated, MCS interface 710 is used to communicate the radio parameters that are delay sensitive from a controlling point of view. MCS interface 710 can be shared between different radio modems (multipoint) but it cannot be shared with any other functionality that could limit the usage of MCS interface 710 from a latency point of view.

The control signals sent on MCS 700 that may enable/disable a radio modem 610 should be built on a modem's periodic events. Each radio activity controller 720 may obtain this information about a radio modem's periodic events from synchronizer 730. This kind of event can be, for example, frame clock event in GSM (4.615 ms), slot clock event in Bluetooth™ (625 us) or targeted beacon transmission time in WLAN (100 ms) or any multiple of these. A radio modem 610 may send its synchronization indications when (1) Any radio activity controller 720 requests it, (2) a radio modem internal time reference is changed (e.g. due to handover or handoff). The latency requirement for the synchronization signal is not critical as long as the delay is constant within a few microseconds. The fixed delays can be taken into account in the scheduling logic of radio activity controller 710.

For predictive wireless communication mediums, the radio modem activity control may be based on the knowledge of when the active radio modems 610 are about to transmit (or receive) in the specific connection mode in which the radios are currently operating. The connection mode of each radio modem 610 may be mapped to the time domain operation in their respective radio activity controller 720. As an example, for a GSM speech connection, priority controller 740 may have knowledge about all traffic patterns of GSM. This information may be transferred to the appropriate radio activity controller 720 when radio modem 610 becomes active, which may then recognize that the speech connection in GSM includes one transmission slot of length 577 µs, followed by an empty slot after which is the reception slot of 577 µs, two empty slots, monitoring (RX on), two empty slots, and then it repeats. Dual transfer mode means two transmission slots, empty slot, reception slot, empty slot, monitoring and two empty slots. When all traffic patterns that are known a priori by the radio activity controller 720, it only needs to know when the transmission slot occurs in time to gain knowledge of when the GSM radio modem is active. This information may be obtained by synchronizer 730. When the active radio modem 610 is about to transmit (or receive) it must check every time whether the modem activity control signal from its respective radio activity controller 720 permits the communication. Radio activity controller 720 is always either allowing or disabling the transmission of one full radio transmission block (e.g. GSM slot).

### IX. A wireless communication device including an alternative example of a distributed multiradio control system.

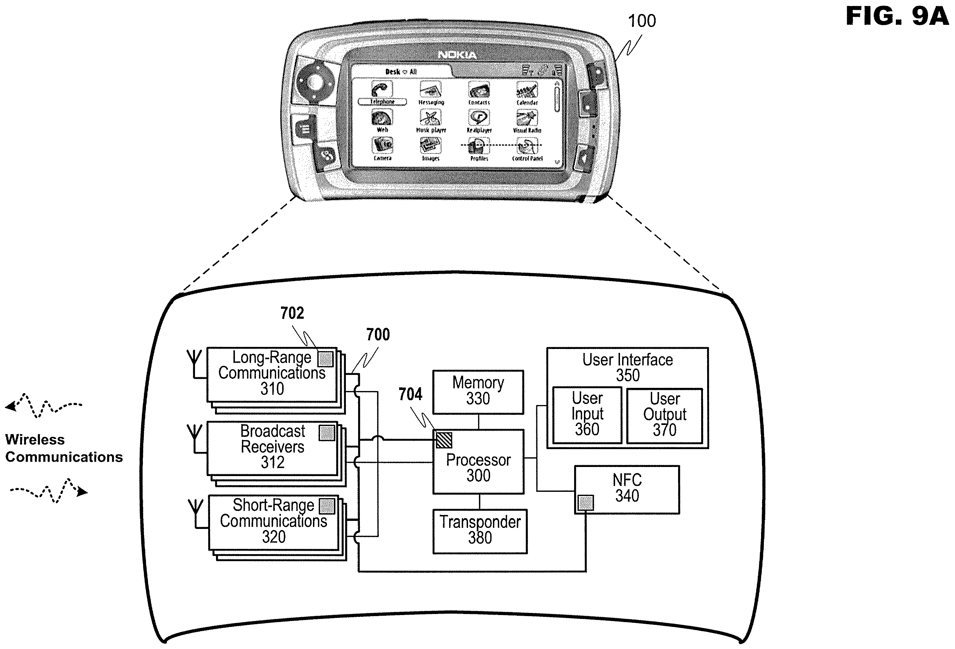

An alternative distributed control configuration in accordance with at least one embodiment of the present invention is disclosed in FIG. 9A-9C. In FIG. 9A, distributed control components 702 continue to be linked by MCS 700. However, now distributed control component 704 is also directly coupled to distributed control components 702 via an MCS interface. As a result, distributed control component 704 may also utilize and benefit from MCS 700 for transactions involving the various communication components of WCD 100.

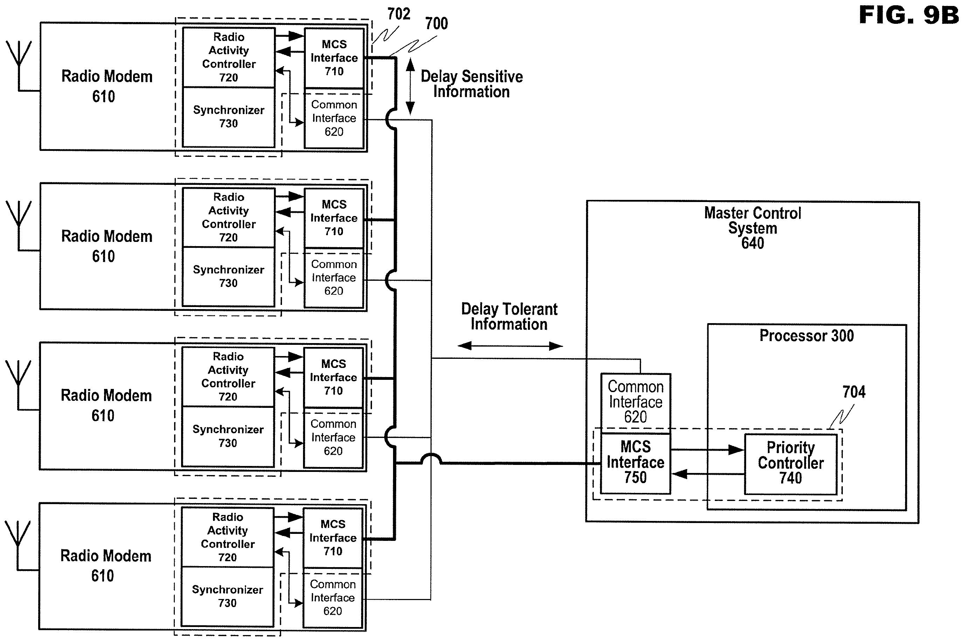

Referring now to FIG. 9B, the inclusion of distributed control component 704 onto MCS 700 is shown in more detail. Distributed control component 704 includes at least priority controller 740 coupled to MCS interface 750. MCS interface 750 allows priority controller 740 to send information to, and receive information from, radio activity controllers 720 via a low-traffic connection dedicated to the coordination of communication resources in WCD 100. As previously stated, the information provided by priority controller 740 may not be deemed delay sensitive information, however, the provision of priority information to radio activity controllers 720 via MCS 700 may improve the overall communication efficiency of WCD 100. Performance may improve because quicker communication between distributed control components 702 and 704 may result in faster relative priority resolution in radio activity controllers 720. Further, the common interface system 620 of WCD 100 will be relieved of having to accommodate communication traffic from distributed control component 704, reducing the overall communication load in master control system 640. Another benefit may be realized in communication control flexibility in WCD 100. New features may be introduced into priority controller 740 without worrying about whether the messaging between control components will be delay tolerant or sensitive because an MCS interface 710 is already available at this location.

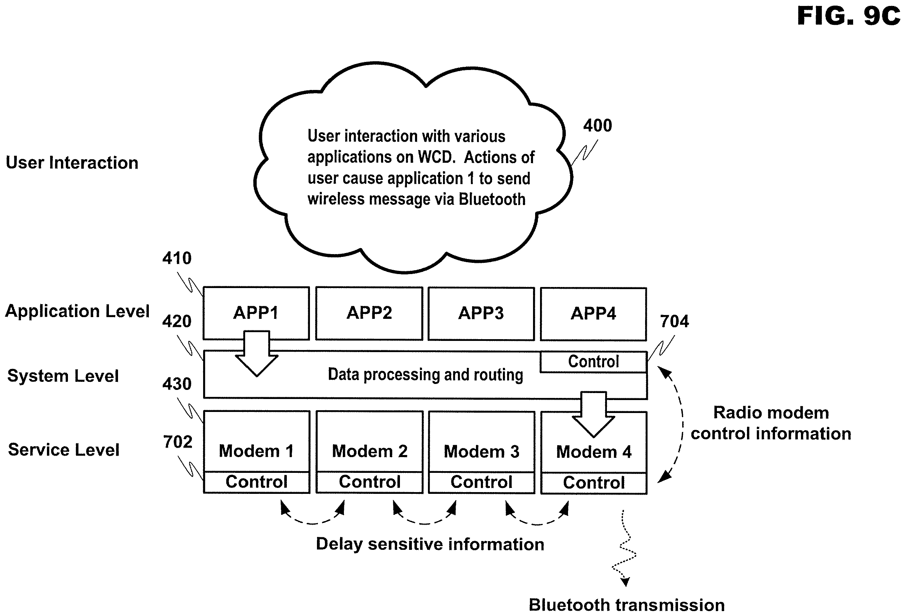

FIG. 9C discloses the operational effect of the enhancements seen in the current alternative embodiment of the present invention on communication in WCD 100. The addition of an alternative route for radio modem control information to flow between distributed control components 702 and 704 may both improve the communication management of radio activity controllers 720 and lessen the burden on master control system 640. In this embodiment, all distributed control components of MCS 700 are linked by a dedicated control interface, which provides immunity to communication coordination control messaging in WCD 100 when the master control system 640 is experiencing elevated transactional demands.

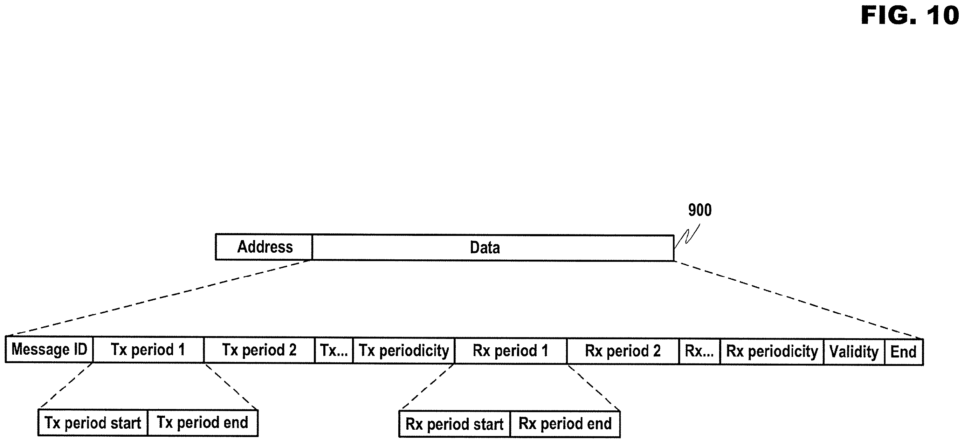

An example message packet 900 is disclosed in FIG. 10 in accordance with at least one embodiment of the present invention. Example message packet 900 includes activity pattern information that may be formulated by MRC 600 or radio activity controller 720. The data payload of packet 900 may include, in at least one embodiment of the present invention, at least Message ID information, allowed/disallowed transmission (Tx) period information, allowed/disallowed reception (Rx) period information, Tx/Rx periodicity (how often the Tx/Rx activities contained in the period information occur), and validity information describing when the activity pattern becomes valid and whether the new activity pattern is replacing or added to the existing one. The data payload of packet 900, as shown, may consist of multiple allowed/disallowed periods for transmission or reception (e.g., Tx period 1,2...) each containing at least a period start time and a period end time during which radio modem 610 may either be permitted or prevented from executing a communication activity. While the distributed example of MCS 700 may allow radio modem control activity to be controlled real-time (e.g., more control messages with finer granularity), the ability to include multiple allowed/disallowed periods into a single message packet 900 may support radio activity controllers 720 in scheduling radio modem behavior for longer periods of time, which may result in a reduction in message traffic. Further, changes in radio modem 610 activity patterns may be amended using the validity information in each message packet 900.

The modem activity control signal (e.g., packet 900) may be formulated by MRC 600 or radio activity controller 720 and transmitted on MCS 700. The signal includes activity periods for Tx and Rx separately, and the periodicity of the activity for the radio modem 610. While the native radio modem clock is the controlling time domain (never overwritten), the time reference utilized in synchronizing the activity periods to current radio modem operation may be based on one of at least two standards. In a first example, a transmission period may start after a pre-defined amount of synchronization events have occurred in radio modem 610. Alternatively, all timing for MRC 600 or between distributed control components 702 may be standardized around the system clock for WCD 100. Advantages and disadvantages exist for both solutions. Using a defined number of modem synchronization events is beneficial because then all timing is closely aligned with the radio modem clock. However, this strategy may be more complicated to implement than basing timing on the system clock. On the other hand, while timing based on the system clock may be easier to implement as a standard, conversion to modem clock timing must necessarily be implemented whenever a new activity pattern is installed in radio modem 610.

The activity period may be indicated as start and stop times. If there is only one active connection, or if there is no need to schedule the active connections, the modem activity control signal may be set always on allowing the radio modems to operate without restriction. The radio modem 610 should check whether the transmission or reception is allowed before attempting actual communication. The activity end time can be used to check the synchronization. Once the radio modem 610 has ended the transaction (slot/packet/burst), it can check whether the activity signal is still set (it should be due to margins). If this is not the case, the radio modem 610 can initiate a new synchronization with MRC 600 or with radio activity controller 720 through synchronizer 730. The same happens if a radio modem time reference or connection mode changes. A problem may occur if radio activity controller 720 runs out of the modem synchronization and starts to apply modem transmission/reception restrictions at the wrong time. Due to this, modem synchronization signals need to be updated periodically. The more active wireless connections, the more accuracy is required in synchronization information.

### X. Radio modem interface to other devices.

As a part of information acquisition services, the MCS interface 710 needs to send information to MRC 600 (or radio activity controllers 720) about periodic events of the radio modems 610. Using its MCS interface 710, the radio modem 610 may indicate a time instance of a periodic event related to its operation. In practice these instances are times when radio modem 610 is active and may be preparing to communicate or communicating. Events occurring prior to or during a transmission or reception mode may be used as a time reference (e.g., in case of GSM, the frame edge may be indicated in a modem that is not necessarily transmitting or receiving at that moment, but we know based on the frame clock that the modem is going to transmit [x]ms after the frame clock edge). Basic principle for such timing indications is that the event is periodic in nature. Every incident needs not to be indicated, but the MRC 600 may calculate intermediate incidents itself. In order for that to be possible, the controller would also require other relevant information about the event, e.g. periodicity and duration. This information may be either embedded in the indication or the controller may get it by other means. Most importantly, these timing indications need to be such that the controller can acquire a radio modem's basic periodicity and timing. The timing of an event may either be in the indication itself, or it may be implicitly defined from the indication information by MRC 600 (or radio activity controller 720).

In general terms these timing indications need to be provided on periodic events like: schedule broadcasts from a base station (typically TDMA/MAC frame boundaries) and own periodic transmission or reception periods (typically Tx/Rx slots). Those notifications need to be issued by the radio modem 610: (1) on network entry (i.e. modem acquires network synchrony), (2) on periodic event timing change e.g. due to a handoff or handover and (3) as per the policy and configuration settings in the multiradio controller (monolithic or distributed).
In at least one embodiment of the present invention, the various messages exchanged between the aforementioned communication components in WCD 100 may be used to dictate behavior on both a local (radio modem level) and global (WCD level) basis. MRC 600 or radio activity controller 720 may deliver a schedule to radio modem 610 with the intent of controlling that specific modem, however, radio modem 610 may not be compelled to conform to this schedule. The basic principle is that radio modem 610 is not only operating according to multiradio control information (e.g., operates only when MRC 600 allows) but is also performing internal scheduling and link adaptation while taking MRC scheduling information into account.

### XI. Integrating MRC control to implement an exemplary Maximum Transfer Unit strategy.

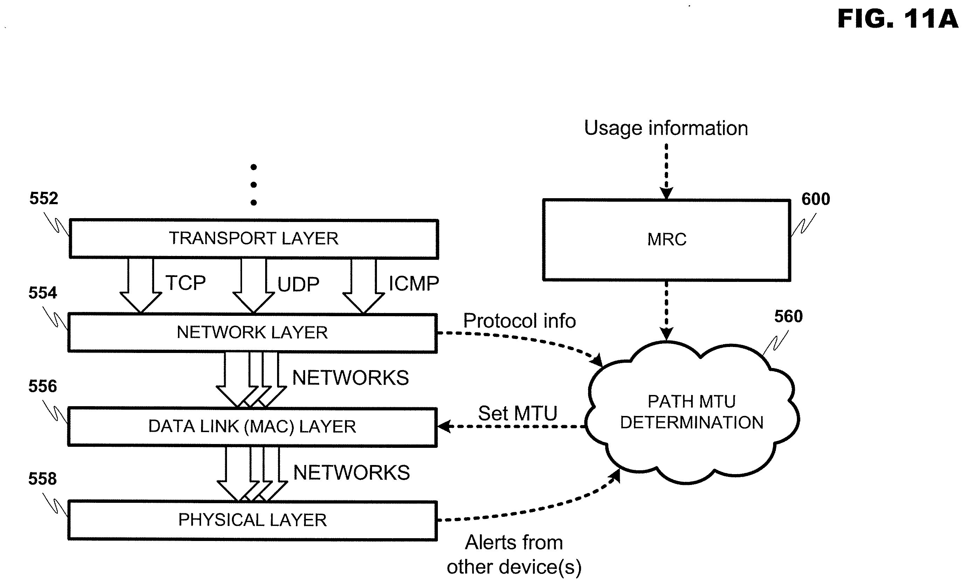

FIG. 11A discloses a modified MTU control strategy that integrates multiradio control aspects in accordance with at least one embodiment of the present invention. The path MTU determination process 560 may continue to take into account link setup information when establishing an appropriate maximum packet size. Link setup information may include, for example, a particular communication medium being employed to convey IP packets and requests from other devices to alter the maximum size of the IP packets. However, this process may now also incorporate operational schedule information provided by MRC 600 (in either a unified or distributed configuration) for use in controlling maximum packet size.

In the example of FIG. 11A, MRC 600 may receive usage information from other entities in WCD 100 such as application information transmission requests, wireless communication medium messaging information, radio module status information, etc. in order to formulate operational schedules for one or more wireless communication mediums and/or radio modules 610. Some or all of the information formulated by MRC 600 may then be fed to the path MTU determination process 560, and this information may be taken into account in determining an appropriate path MTU size. More specifically, either MRC 600 and/or the path MTU determination process 560 may check to see if any of the one or more wireless communication mediums supported by radio modules 610 is being employed to convey (e.g., send or receive) IP packets. If one or more wireless communication mediums are being utilized, the operational schedules of these wireless communication mediums may be used to determine an appropriate maximum packet size for packets issued by IP stack 550.

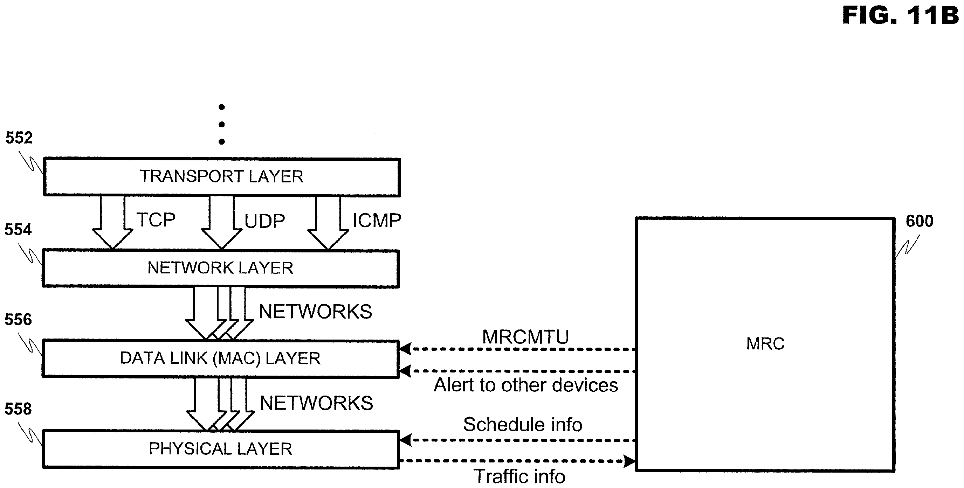

More specifically, FIG. 11B discloses an example, in accordance with at least one embodiment of the present invention, wherein information may be exchanged between layers of IP stack 550 and MRC 600. This exchanged information may be utilized to control both IP packets that are being sent from applications within WCD 100 and IP packets that are being received from other devices into WCD 100. With respect to packets being sent from WCD 100 to other devices via wireless communication, an additional MTU variable may be added to IP stack 550 herein referred to as MRCMTU. This MTU variable may be adjusted from outside of IP stack 550 by, for example, MRC 600 to set a maximum datagram size.

IP stack 550 may still determine a path MTU using a path MTU discovery process such as previously described above. This maximum datagram size may be utilized whenever the MRCMTU packet size has not been set (e.g., as a default). However, upon formulating an operational schedule for one or more wireless communication mediums and/or radio modules 610 in WCD 100, MRC 600 may set the MRCMTU in accordance with an operational schedule of a wireless communication medium that is currently allocated to convey IP packets. Further, the MRCMTU may be formulated in view of the theoretical link speed and time allocated to a wireless communication medium that is conveying IP packets during a time period. Whenever the MRCMTU is set within IP stack 550, the smaller of the Path MTU or the MRCMTU is used by the IP stack to control the maximum datagram size.

In the case of receiving IP packets from another device over a particular wireless communication medium, MRC 600 will not have direct control over the operation of the other device. In an exemplary case where the other device is sending IP packets that, based on the current link speed, exceed the time allocated to a particular wireless communication medium and/or radio module 610, the packets may become lost because the time allocated to the wireless communication medium will cut off before the complete packet is received. As each IP packet exceeds the allocated time, it becomes highly unlikely that any IP packets will get through at all, and as a result, the IP link may be lost. Therefore, unless the wireless communication medium and/or radio module 610 is elevated in priority within WCD 100, the IP link will simply be overcome by other higher priority processes executing in the device.

However, MRC 600 may be able to request a change in another device's behavior through the use of a wireless alert. As previously explained, ICMP messages may be used to send error and/or control alerts to other devices. For example, a "datagram too big" message may be sent to another device to indicate that the other device should reduce the maximum datagram size of IP packets it is sending to WCD 100. The sending of such an alert may be employed in various situations. For example, if packets sent to WCD 100 are being lost because they are too big with respect to the allowed time periods for a particular wireless communication medium and/or radio module 610, WCD 100 may attempt to send a "datagram too big" ICMP message back to the originating device. This situation may be further complicated if no IP packets are being successfully received in their entirety at WCD 100, and therefore, the header information indicating the source of the packet stream (to which the corrective ICMP message should be directed) may not be available. In such a situation, it may be possible to extract the IP header information from a partially received packet. However, this extraction may necessitate a change in chipset behavior in order to accommodate the extraction of source data from a corrupt or incomplete packet.

Further, in some situations it may be beneficial to send a "datagram too big" ICMP alert before a packet is ever received at WCD 100. This may occur, for example, in a scenario where WCD 100 has many active processes that have a higher priority than the wireless communication medium and/or radio module 610 conveying IP packets. As the allocated time for these conveyance resources may be extremely limited, a "datagram too big" message may be sent to an identified sending device before packets are received in order to increase the likelihood that the received IP packets will fit within the operational schedule of the wireless communication medium and/or radio module 610 as allocated by MRC 600.

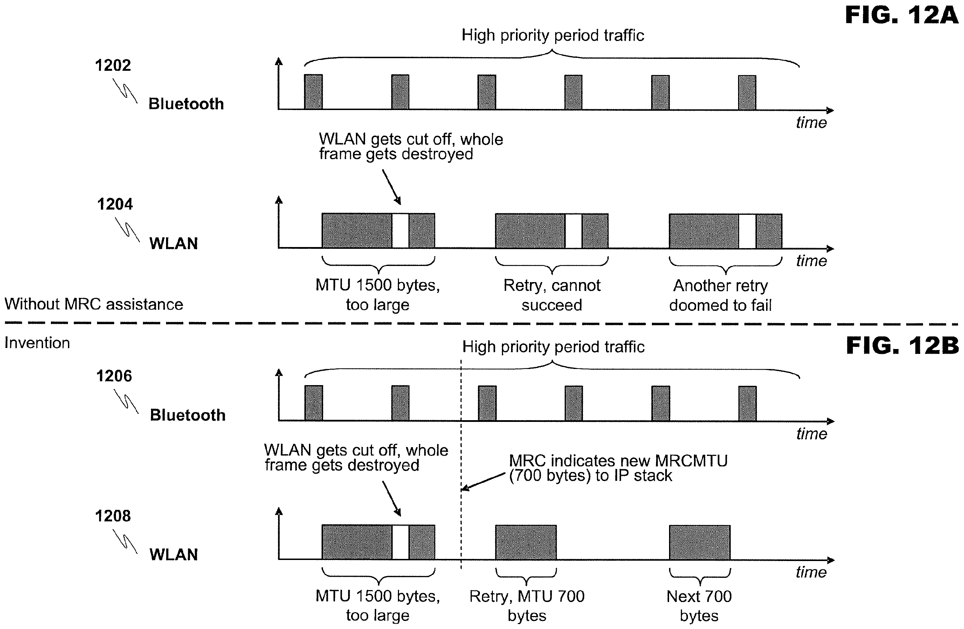

Now referring to FIG. 12A, an exemplary activity flow for two potentially conflicting wireless communication mediums is disclosed in accordance with at least one embodiment of the present invention. Initially, an activity flow without the influence of any embodiments of the present invention is shown for Bluetooth™ communication 1202 and for WLAN communication 1204. WLAN is the wireless communication medium being utilized for IP packet conveyance. In this example the Bluetooth™ 1202 has a higher relative priority than WLAN 1204. As a result Bluetooth™ 1202 would prevail over WLAN 1204 in any time period where they conflict (e.g., a time period where both wireless communication mediums desire to be active).

Bluetooth™ 1202 and WLAN 1204 may be allocated communication time based on an operational schedule formulated by MRC 600. As a result of this operational schedule, Bluetooth™ 1202 and WLAN 1204 may each have operational periods reserved in the relatively periodic pattern shown in FIG. 12A. If the path MTU for WLAN 1204 is set at 1500 bytes/datagram (based on, for example, a default setting for WLAN), interference may occur as shown. More specifically, the maximum IP packet size of 1500 bytes/datagram will unavoidably span the time periods reserved for Bluetooth™ 1202 operation. Due to the relative priority of Bluetooth™ 1202 over WLAN 1204, each WLAN 1204 packet will be cut off before completion, and will therefore be corrupted or lost completely. As further shown in FIG. 12A, each subsequent IP packet retry for WLAN 1204 may also fail because the IP packet cannot be sent or received completely in the time allocated to WLAN 1204.

However, various embodiments of the present invention may help to alleviate the problem depicted in FIG. 12A. FIG. 12B discloses a similar exemplary scenario as FIG. 12A with the advent of modified MTU multiradio control. Again Bluetooth™ 1206 and WLAN 1208 may operate in a substantially periodic fashion in this example in view of operational schedules that may be formulated by MRC 600. In this scenario, the first packet again fails due to conditions similar to the previous example. However, in this situation MRC 600 adjusts a maximum datagram size variable, such as MRCMTU, after the first packet failure in order to redefine the maximum IP packet size in accordance with the communication time being periodically allocated to WLAN 1208. It is important to note that, while in this particular example an IP packet is shown to fail prior to MTU size adjustment, this sort of "trial and error" operation is not necessary and/or expected in the process, and is just shown for the sake of explanation. In at least one embodiment of the present invention, MTU size adjustment may occur as soon as MRC 600 formulates an operational schedule for a wireless communication medium conveying IP packets, and therefore, no packet failures may occur due to size mismatch. As a result, more total packets may be sent to convey the same amount of information as shown in FIG. 12A, but there may also be fewer collisions between WLAN 1208 and Bluetooth™ 1206, resulting in improved performance.

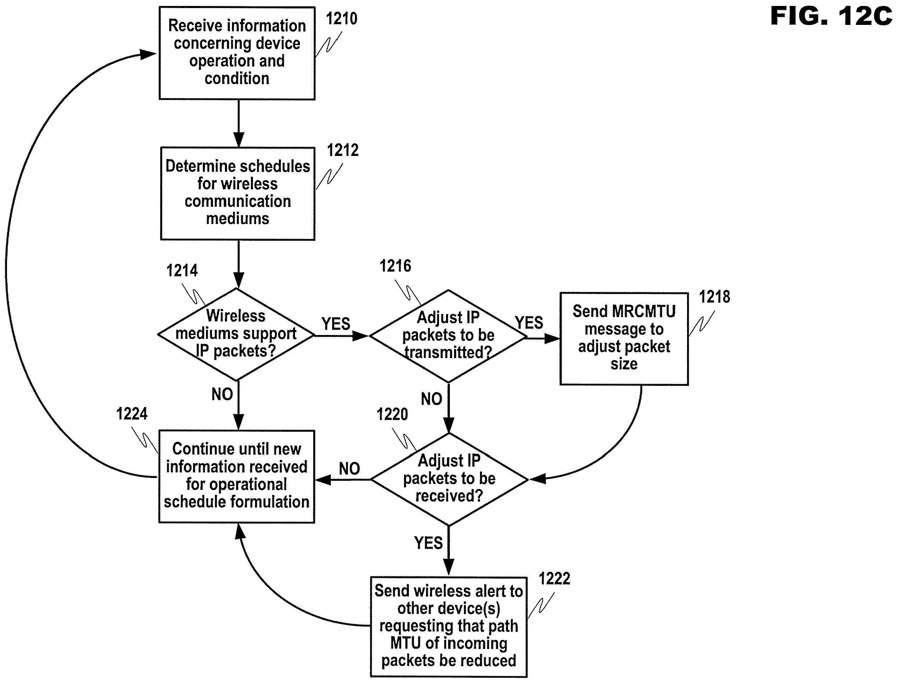

FIG. 12C discloses an exemplary process flowchart in accordance with at least one embodiment of the present invention. In step 1210 MRC 600 may receive information regarding device operation and condition from various software and/or hardware components of WCD 100. This information may include, for example, applications sending or requesting data, wireless communication medium information concerning pending message age, amount, priority, etc., status information from radio modules 610, environmental conditions regarding WCD 100, etc. MRC 600 may then utilize this received information to formulate operational schedules for one or more wireless communication mediums being supported by at least one radio module 610 within WCD 100 in step 1212.

After the formulation of operational schedules in step 1212, MRC 600 may further determine in step 1214 whether any wireless communication mediums are being employed in conveying IP packets. This information may come from applications executing on WCD 100, from IP stack 550, etc. If no IP packets are currently being conveyed by a wireless communication medium, then in step 1224 the process may continue in its current state until new information is received. Alternatively, if IP packets are expected to be sent or received via a wireless communication medium, then in step 1216 an inquiry may be made as to whether IP packets pending transmission need to be adjusted in accordance with the operational schedules formulated by MRC 600. If, for example, the maximum transfer size for IP packets being produced by IP stack 550 currently exceeds the communication time allocated to the wireless communication medium being employed to convey these packets, then in step 1218 a MTU variable like MRCMTU may be adjusted to correlate the size of the IP packets with the allowed operational time periods of the wireless communication medium.

Further, in step 1220 the process then inquires as to whether IP packets being received (or slated to be received as indicated by a requesting application) require adjustment. If adjustment is needed to bring the maximum IP packet size into accordance with the time periods being allocated to the wireless communication medium, then in step 1222 an ICMP wireless alert message may be sent to the originating device for the IP packets requesting that the path MTU for these packets be reduced (e.g., a "datagram too big" message). After any IP packet maximum transfer unit size adjustments are made in step 1216 through 1222, the process may continue under these settings at step 1224 until new information is received.

Accordingly, it will be apparent to persons skilled in the relevant art that various changes in forma and detail can be made therein without departing from the scope of the invention. This the breadth and scope of the present invention should not be limited by any of the above-described exemplary embodiments, but in accordance with the following claims, respectively.

## Claims

1. A method performed by a multiradio controller (600) for managing wireless communication by two or more wireless communication mediums supported by one or more radio modules (500), (510), (610) in a wireless communication device (100), the method comprising:
receiving (1210) information regarding the two or more wireless communication mediums supported by the one or more radio modules (500), (510), (610) in the wireless communication device (100);
formulating (1212) respective operational schedules for the two or more wireless communication mediums, wherein an operational schedule includes allowed time periods for communication by respective one of the two or more communication mediums;
determining (1214) at least one wireless communication medium being used for communicating Internet Protocol information from the two or more wireless communication mediums; and
adjusting (1216), (1220), in response to the determination that the at least one wireless communication medium is being used for communicating Internet Protocol information, maximum transfer packet size for the Internet Protocol communication to correlate size of Internet Protocol communication packets with the allowed time periods for the communication medium based on at least the respective operational schedule.

2. The method according to claim 1, wherein the information regarding two or more wireless communication mediums includes at least one of a number of pending messages, an age of pending messages, a priority of pending messages and error rate information.

3. The method according to claim 1 or claim 2, wherein formulating the operational schedule for the two or more communication mediums includes assigning one or more time periods during which operation is permitted to respective one of the two or more of the wireless communication mediums.

4. The method according to any of the preceding claims, wherein adjusting the maximum transfer packet size includes adjusting the maximum transfer packet size on at least one of sent and received packets.

5. The method according to claim 4, wherein the maximum transfer packet size of a sent packet is adjusted by setting a size control variable in the Internet Protocol stack.

6. The method according to claim 4, wherein the received package size is controlled by sending a wireless alert message to another device sending the Internet Protocol packet to the wireless communication device.

7. The method according to claim 6, wherein the wireless alert message informs the other device to reduce the size of the Internet Protocol packet.

8. The method according to claim 6, wherein the wireless alert message is sent to the other device before any Internet Protocol packets have been received at the wireless communication device.

9. The method according to claim 6, wherein the wireless alert message is sent to the other device in response of not successfully receiving one or more Internet Protocol packets from the other device.

10. A computer program comprising computer readable program code configured to cause performing a method according to any of the preceding claims when said program is run on a computer.

11. A computer software product comprising a computer-readable medium, in which instructions are stored, which instructions, when read by a computer cause the computer to perform a method according to any of the claims 1-9.

12. A multiradio controller (600) for managing wireless communication by two or more wireless communication mediums supported by one or more radio modules (500, 510, 610) in a wireless communication device (100), the multiradio controller (600) comprising:
means (600) for receiving information regarding the two or more wireless communication mediums supported by the one or more radio modules (500),(510),(610) in the wireless communication device (100);
means (600) for formulating respective operational schedules for the two or more wireless communication mediums, wherein an operational schedule includes allowed time periods for communication by respective one of the two or more communication mediums;
means (600) for determining at least one wireless communication medium being used for communicating Internet Protocol information from the two or more wireless communication mediums; and
means (600) for adjusting, in response to the determination that the at least one wireless communication medium is being used for communicating Internet Protocol information, maximum transfer packet size for the Internet Protocol communication to correlate size of Internet Protocol communication packets with the allowed time periods for the communication medium based at least on the respective operational schedule.

13. The multiradio controller (600) according to claim 12, wherein adjusting the maximum transfer packet size includes adjusting the maximum transfer packet size on at least one of sent and received packets.

14. The multiradio controller (600) according to claim 13, wherein the maximum transfer packet size of a sent packet is adjusted by setting a size control variable in the Internet Protocol stack.

15. The multiradio controller (600) according to claim 14, wherein the size control variable is set by controller means.

16. The multiradio controller (600) according to claim 15, wherein the Internet Protocol stack sets the maximum transfer packet size to the smaller of the size control variable set by the controller means and the maximum transfer packet size set by controls within the Internet Protocol stack.

## Patentansprüche

1. Verfahren, das von einem Mehrfunk-Controller (600) durchgeführt wird, zur Steuerung drahtloser Kommunikation durch zwei oder mehr drahtlose Kommunikationsmedien, die durch ein oder mehrere Funkmodule (500), (510), (610) in einer drahtlosen Kommunikationsvorrichtung (100) unterstützt werden, wobei das Verfahren umfasst:
Empfangen (1210) von Informationen bezüglich der zwei oder mehr drahtlosen Kommunikationsmedien, die durch das eine oder die mehreren Funkmodule (500), (510), (610) in der drahtlosen Kommunikationsvorrichtung (100) unterstützt werden;
Formulieren (1212) jeweiliger Betriebspläne für die zwei oder mehr drahtlosen Kommunikationsmedien, wobei ein Betriebsplan vorgegebene Zeiträume zur Kommunikation durch ein jeweiliges der zwei oder mehr Kommunikationsmedien umfasst;
Bestimmen (1214) mindestens eines drahtlosen Kommunikationsmediums, das zum Kommunizieren von Internetprotokoll-Informationen verwendet wird, aus den zwei oder mehr drahtlosen Kommunikationsmedien; und
Anpassen (1216), (1220) in Reaktion auf die Bestimmung, dass das mindestens eine drahtlose Kommunikationsmedium zum Kommunizieren von Internetprotokoll-Informationen verwendet wird, einer maximalen Übertragungspaketgröße für die Internetprotokoll-Kommunikation zum Korrelieren einer Größe von Internetprotokoll-Kommunikationspaketen mit den vorgegebenen Zeiträumen für das Kommunikationsmedium wenigstens basierend auf dem jeweiligen Betriebsplan.

2. Verfahren nach Anspruch 1, wobei die Informationen bezüglich zweier oder mehrerer drahtloser Kommunikationsmedien eine Anzahl von anhängigen Nachrichten, ein Alter von anhängigen Nachrichten, eine Priorität von anhängigen Nachrichten und/oder Fehlerrateninformationen umfassen.

3. Verfahren nach Anspruch 1 oder 2, wobei das Formulieren des Betriebsplans für die zwei oder mehr Kommunikationsmedien ein Zuordnen eines oder mehrerer Zeiträume, während derer Betrieb zugelassen ist, zu einem jeweiligen der zwei oder mehr der drahtlosen Kommunikationsmedien umfasst.

4. Verfahren nach einem der vorhergehenden Ansprüche, wobei das Anpassen der maximalen Übertragungspaketgröße ein Anpassen der maximalen Übertragungspaketgröße bei gesendeten und/oder empfangenen Paketen umfasst.

5. Verfahren nach Anspruch 4, wobei die maximale Übertragungspaketgröße eines gesendeten Pakets durch Festlegen einer Größenregelvariablen im Internetprotokollstapel angepasst wird.

6. Verfahren nach Anspruch 4, wobei die Empfangspaketgröße durch Senden einer drahtlosen Meldenachricht an eine andere Vorrichtung geregelt wird, die das Internetprotokoll-Paket an die drahtlose Kommunikationsvorrichtung sendet.

7. Verfahren nach Anspruch 6, wobei die drahtlose Meldenachricht die andere Vorrichtung informiert, die Größe des Internetprotokoll-Pakets zu reduzieren.

8. Verfahren nach Anspruch 6, wobei die drahtlose Meldenachricht an die andere Vorrichtung gesendet wird, bevor irgendwelche Internetprotokoll-Pakete an der drahtlosen Kommunikationsvorrichtung empfangen wurden.

9. Verfahren nach Anspruch 6, wobei die drahtlose Meldenachricht in Reaktion auf ein nicht erfolgreiches Empfangen eines oder mehrerer Internetprotokoll-Pakete von der anderen Vorrichtung an die andere Vorrichtung gesendet wird.

10. Computerprogramm, umfassend computerlesbaren Programmcode, der so konfiguriert ist, dass er ein Durchführen des Verfahrens nach einem der vorhergehenden Ansprüche bewirkt, wenn das Programm auf einem Computer ausgeführt wird.

11. Computersoftwareprodukt, umfassend ein computerlesbares Medium, in welchem Anweisungen gespeichert sind, wobei die Anweisungen, wenn von einem Computer gelesen, den Computer zum Durchführen eines Verfahrens nach einem der Ansprüche 1 bis 9 veranlassen.

12. Mehrfunk-Controller (600) zum Steuern drahtloser Kommunikation durch zwei oder mehr drahtlose Kommunikationsmedien, die durch ein oder mehrere Funkmodule (500), (510), (610) in einer drahtlosen Kommunikationsvorrichtung (100) unterstützt werden, wobei der Mehrfunk-Controller (600) umfasst:
Mittel (600) zum Empfangen von Informationen bezüglich der zwei oder mehr drahtlosen Kommunikationsmedien, die durch das eine oder die mehreren Funkmodule (500), (510), (610) in der drahtlosen Kommunikationsvorrichtung (100) unterstützt werden;
Mittel (600) zum Formulieren jeweiliger Betriebspläne für die zwei oder mehr drahtlosen Kommunikationsmedien, wobei ein Betriebsplan vorgegebene Zeiträume zur Kommunikation durch ein jeweiliges der zwei oder mehr Kommunikationsmedien umfasst;
Mittel (600) zum Bestimmen mindestens eines drahtlosen Kommunikationsmediums, das zum Kommunizieren von Internetprotokoll-Informationen verwendet wird, aus den zwei oder mehr drahtlosen Kommunikationsmedien; und
Mittel (600) zum Anpassen in Reaktion auf die Bestimmung, dass das mindestens eine drahtlose Kommunikationsmedium zum Kommunizieren von Internetprotokoll-Informationen verwendet wird, einer maximalen Übertragungspaketgröße für die Internetprotokoll-Kommunikation zum Korrelieren einer Größe von Internetprotokoll-Kommunikationspaketen mit den vorgegebenen Zeiträumen für das Kommunikationsmedium wenigstens basierend auf dem jeweiligen Betriebsplan.

13. Mehrfunk-Controller (600) nach Anspruch 12, wobei das Anpassen der maximalen Übertragungspaketgröße ein Anpassen der maximalen Übertragungspaketgröße bei gesendeten und/oder empfangenen Paketen umfasst.

14. Mehrfunk-Controller (600) nach Anspruch 13, wobei die maximale Übertragungspaketgröße eines gesendeten Pakets durch Festlegen einer Größenregelvariablen im Internetprotokollstapel angepasst wird.

15. Mehrfunk-Controller (600) nach Anspruch 14, wobei die Größenregelvariable durch Steuermittel festgelegt wird.

16. Mehrfunk-Controller (600) nach Anspruch 15, wobei der Internetprotokollstapel die maximale Übertragungspaketgröße auf die kleinere der von den Steuermitteln festgelegten Größenregelvariablen und der von Steuerungen innerhalb des Internetprotokollstapels festgelegten maximalen Übertragungspaketgröße festlegt.

## Revendications

1. Procédé exécuté par un contrôleur multiradio (600) pour la gestion d'une communication sans fil par deux, ou davantage, moyens de communication sans fil pris en charge par un ou plusieurs modules radio (500), (510), (610) dans un dispositif de communication sans fil, le procédé comprenant les étapes suivantes :
recevoir (1210) des informations concernant les deux, ou davantage, moyens de communication sans fil pris en charge par les un ou plusieurs modules radio (500), (510), (610) dans le dispositif de communication sans fil (100) ;
formuler (1212) des planifications opérationnelles respectives pour les deux, ou davantage, moyens de communication sans fil, où une planification opérationnelle comprend des périodes de temps autorisées pour la communication par un moyen respectif parmi les deux, ou davantage, moyens de communication ;
déterminer (1214) au moins un moyen de communication sans fil étant utilisé pour communiquer des informations de protocole Internet depuis les deux, ou davantage, moyens de communication sans fil ; et
ajuster (1216), (1220), en réponse à la détermination selon laquelle l'au moins un moyen de communication sans fil est utilisé pour communiquer des informations de protocole Internet, la taille maximale des paquets de transfert pour la communication sur protocole Internet pour corréler la taille des paquets de communication sur protocole Internet avec les périodes de temps autorisées pour le moyen de communication sur la base d'au moins la planification opérationnelle respective.

2. Procédé selon la revendication 1, dans lequel les informations concernant deux, ou davantage, moyens de communication sans fil comprennent au moins un élément parmi le nombre de messages en attente, l'âge des messages en attente, la priorité des messages en attente et les informations de taux d'erreurs.

3. Procédé selon la revendication 1 ou la revendication 2, dans lequel formuler la planification opérationnelle pour les deux, ou davantage, moyens de communication comprend d'assigner une ou plusieurs périodes de temps au cours desquelles le fonctionnement est autorisé pour le moyen respectif parmi les deux, ou davantage, moyens de communication sans fil.

4. Procédé selon l'une quelconque des revendications précédentes, dans lequel ajuster la taille maximale des paquets de transfert comprend d'ajuster la taille maximale des paquets de transfert sur au moins un des paquets envoyés et reçus.

5. Procédé selon la revendication 4, dans lequel la taille maximale des paquets de transfert d'un paquet envoyé est ajustée en définissant une variable de contrôle de taille dans la pile de protocoles Internet.

6. Procédé selon la revendication 4, dans lequel la taille du paquet reçu est contrôlée en envoyant un message d'alerte sans fil à un autre dispositif envoyant le paquet de protocole Internet au dispositif de communication sans fil.

7. Procédé selon la revendication 6, dans lequel le message d'alerte sans fil informe l'autre dispositif pour réduire la taille du paquet de protocole Internet.

8. Procédé selon la revendication 6, dans lequel le message d'alerte sans fil est envoyé à l'autre dispositif avant que des paquets de protocole Internet n'aient été reçus au niveau du dispositif de communication sans fil.

9. Procédé selon la revendication 6, dans lequel le message d'alerte sans fil est envoyé à l'autre dispositif en réponse au fait de ne pas recevoir avec succès un ou plusieurs paquets de protocole Internet depuis l'autre dispositif.

10. Programme informatique comprenant un code de programme lisible par ordinateur configuré pour entraîner l'exécution d'un procédé selon l'une quelconque des revendications précédentes lorsque ledit programme est exécuté sur un ordinateur.

11. Produit logiciel informatique comprenant un support lisible par ordinateur, sur lequel sont stockées des instructions, lesquelles instructions, lorsqu'elles sont lues par un ordinateur, amènent l'ordinateur à exécuter un procédé selon l'une quelconque des revendications 1 à 9.

12. Contrôleur multiradio (600) pour gérer une communication sans fil par deux, ou davantage, moyens de communication sans fil pris en charge par un ou plusieurs modules radio (500), (510), (610) dans un dispositif de communication sans fil (100), le contrôleur multiradio (600) comprenant :
des moyens (600) pour recevoir des informations concernant les deux, ou davantage, moyens de communication sans fil pris en charge par les un ou plusieurs modules radio (500), (510), (610) dans le dispositif de communication sans fil (100) ;
des moyens (600) pour formuler (1212) des planifications opérationnelles respectives pour les deux, ou davantage, moyens de communication sans fil, où une planification opérationnelle comprend des périodes de temps autorisées pour la communication par un moyen respectif parmi les deux, ou davantage, moyens de communication ;
des moyens (600) pour déterminer au moins un moyen de communication sans fil étant utilisé pour communiquer des informations de protocole Internet depuis les deux, ou davantage, moyens de communication sans fil ; et
des moyens (600) pour ajuster, en réponse à la détermination selon laquelle l'au moins un moyen de communication sans fil est utilisé pour communiquer des informations de protocole Internet, la taille maximale des paquets de transfert pour la communication sur protocole Internet pour corréler la taille des paquets de communication sur protocole Internet avec les périodes de temps autorisées pour le moyen de communication sur la base d'au moins la planification opérationnelle respective.

13. Contrôleur multiradio (600) selon la revendication 12, dans lequel ajuster la taille maximale des paquets de transfert comprend d'ajuster la taille maximale des paquets de transfert sur au moins un des paquets envoyés et reçus.

14. Contrôleur multiradio (600) selon la revendication 13, dans lequel la taille maximale des paquets de transfert d'un paquet envoyé est ajustée en définissant une variable de contrôle de taille dans la pile de protocoles Internet.

15. Contrôleur multiradio (600) selon la revendication 14, dans lequel la variable de contrôle de taille est définie par des moyens de contrôle.

16. Contrôleur multiradio (600) selon la revendication 15, dans lequel la pile de protocoles Internet définit la taille maximale des paquets de transfert à la plus petite variable de contrôle de taille définie par les moyens de contrôle et la taille maximale des paquets de transfert définie par des contrôles dans la pile de protocoles Internet.
